# EUROPEAN PATENT APPLICATION

(11) **EP 4 576 810 A1**
(43) Date of publication of application: **25.06.2025**
(21) Application number: 23887478.8
(22) Date of filing: 28.06.2023
(51) Int. Cl.: H04Q 11/00

(54) **NETWORK CONNECTION RELATIONSHIP DETERMINATION METHOD AND COMMUNICATION APPARATUS**

(30) Priority: 10.11.2022 CN 202211407813
(71) Applicant: Huawei Technologies Co., Ltd., Shenzhen, Guangdong 518129 (CN)
(72) Inventor: QIAO, Di, Shenzhen, Guangdong 518129 (CN); ZENG, Xiaofei, Shenzhen, Guangdong 518129 (CN); CHEN, Zhandong, Shenzhen, Guangdong 518129 (CN)
(74) Representative: MERH-IP Matias Erny Reichl Hoffmann Patentanwälte PartG mbB
(86) International application number: PCT/CN2023/103289
(87) International publication number: WO 2024/098782

(57) **Abstract**

This application provides a method for determining a network connection relationship and a communication apparatus, to obtain a connection relationship between cascaded devices; and may be applied to a communication system. The method includes: At least one first optical-electrical-optical device obtains first information corresponding to the first optical-electrical-optical device, where the first information corresponding to the first optical-electrical-optical device indicates an online device in a lower-level device of the first optical-electrical-optical device, and the lower-level device of the first optical-electrical-optical device includes a second optical-electrical-optical device and/or an optical network termination. Each of the at least one first optical-electrical-optical device sends, to an optical line termination in an optical network, first information corresponding to the first optical-electrical-optical device. The optical line termination receives, from the at least one first optical-electrical-optical device, the first information corresponding to each first optical-electrical-optical device; and determines a connection relationship between cascaded devices in the optical network based on the first information corresponding to each of the at least one first optical-electrical-optical device.

## Description

This application claims priority to Chinese Patent Application No. 202211407813.3, filed with the China National Intellectual Property Administration on November 10, 2022 and entitled "METHOD FOR DETERMINING NETWORK CONNECTION RELATIONSHIP AND COMMUNICATION APPARATUS", which is incorporated herein by reference in its entirety.

### TECHNICAL FIELD

This application relates to the communication field, and in particular, to a method for determining a network connection relationship and a communication apparatus.

### BACKGROUND

In an optical network, a plurality of devices may be cascaded on an optical line termination (optical line termination, OLT). For example, the OLT may be connected to an optical-electrical-optical (optical-electrical-optical, OEO) device, and the OEO device may be connected to an optical network termination (optical network termination, ONT). In such a cascading optical network, for the OLT, the OEO device or the ONT is a lower-level device of the OLT. Therefore, how to obtain a connection relationship between devices in the cascading optical network is an urgent problem to be resolved.

### SUMMARY

Embodiments of this application provide a method for determining a network connection relationship and a communication apparatus, to obtain a connection relationship between devices in a cascading optical network.

To achieve the foregoing objective, the following technical solutions are used in this application.

According to a first aspect, a method for determining a network connection relationship is provided. The method for determining a network connection relationship includes: A first optical-electrical-optical device obtains first information corresponding to the first optical-electrical-optical device, where the first information corresponding to the first optical-electrical-optical device indicates an online device in a lower-level device of the first optical-electrical-optical device, and the lower-level device of the first optical-electrical-optical device includes a second optical-electrical-optical device and/or an optical network termination. The first optical-electrical-optical device sends, to an optical line termination in an optical network, the first information corresponding to the first optical-electrical-optical device.

Based on the method for determining a network connection relationship provided in the first aspect, the first optical-electrical-optical device may obtain the first information corresponding to the first optical-electrical-optical device, and send the first information to the optical line termination. The first information indicates the online device in the lower-level device of the first optical-electrical-optical device. In this way, information about the online device in the lower-level device of the first optical-electrical-optical device can be transmitted to the optical line termination, to obtain a connection relationship between cascaded devices in the optical network.

In a possible design solution, that the first optical-electrical-optical device obtains the first information corresponding to the first optical-electrical-optical device may include: The first optical-electrical-optical device receives at least one piece of second information, where the second information is information for physical layer operations, administration and maintenance, and one piece of second information corresponds to one lower-level device of the first optical-electrical-optical device. The first optical-electrical-optical device obtains the first information based on the at least one piece of second information. In this way, the first optical-electrical-optical device can determine, based on the information for physical layer operations, administration and maintenance, the lower-level device corresponding to the first optical-electrical-optical device, to obtain the first information, so that an existing message in the optical network can be reused, to simplify an exchange procedure.

Optionally, that the first optical-electrical-optical device obtains the first information based on the second information may include: The first optical-electrical-optical device parses the at least one piece of second information to obtain identification information and status information of a device corresponding to each piece of second information. The first optical-electrical-optical device obtains the first information based on the identification information and the status information of the device corresponding to each piece of second information, where the online device that is in the lower-level device of the first optical-electrical-optical device and that is indicated by the first information includes a device whose status information is being online and that is in a device corresponding to the at least one piece of second information. In this way, the first optical-electrical-optical device can parse the second information that passes through the first optical-electrical-optical device, thereby obtaining identification information and status information of the device corresponding to the second information, to obtain the first information.

In a possible design solution, that the first optical-electrical-optical device obtains the first information corresponding to the first optical-electrical-optical device may include: The first optical-electrical-optical device receives at least one piece of second information and third information, where the second information is information for physical layer operations, administration and maintenance, one piece of second information corresponds to one lower-level device of the first optical-electrical-optical device, and the third information is information for allocation of a time domain resource. The first optical-electrical-optical device obtains the first information based on the second information and the third information. In this way, the first optical-electrical-optical device can determine, based on the second information and the third information, the lower-level device corresponding to the first optical-electrical-optical device, to obtain the first information, so that an existing message in the optical network can be reused, to simplify an exchange procedure.

Optionally, that the first optical-electrical-optical device obtains the first information based on the second information and the third information may include: The first optical-electrical-optical device parses each piece of second information to obtain identification information and status information of a device corresponding to the piece of second information. The first optical-electrical-optical device parses the third information to obtain a device that has been offline and that is in the lower-level device of the first optical-electrical-optical device. The first optical-electrical-optical device determines the first information based on the identification information and the status information of the device corresponding to each piece of second information, and the device that has been offline and that is in the lower-level device of the first optical-electrical-optical device, where the online device that is in the lower-level device of the first optical-electrical-optical device and that is indicated by the first information includes a device, in a device that corresponds to the at least one piece of second information and whose status information is being online, other than the device that has been offline and that is in the lower-level device of the first optical-electrical-optical device. In this way, the first optical-electrical-optical device can parse the second information and the third information that pass through the first optical-electrical-optical device, thereby obtaining identification information and status information of a device corresponding to the second information and learning of a device that goes offline or goes online after the second information is received, to obtain the first information.

In a possible design solution, that the first optical-electrical-optical device obtains the first information corresponding to the first optical-electrical-optical device may include: The first optical-electrical-optical device receives at least one piece of fourth information, where the fourth information is for carrying a data packet exchanged between the optical line termination and the lower-level device of the first optical-electrical-optical device, and the fourth information carries identification information of a device that sends the fourth information. The first optical-electrical-optical device receives third information from the optical line termination, where the third information is information for allocation of a time domain resource. The first optical-electrical-optical device obtains the first information based on the fourth information and the third information. In this way, the first optical-electrical-optical device can determine, based on the fourth information and the third information, the lower-level device corresponding to the first optical-electrical-optical device, to obtain the first information, so that an existing message in the optical network can be reused, to simplify an exchange procedure.

Optionally, that the first optical-electrical-optical device obtains the first information based on the fourth information and the third information may include: The first optical-electrical-optical device parses the fourth information to obtain identification information of a lower-level device that is of the first optical-electrical-optical device and that corresponds to each piece of fourth information. The first optical-electrical-optical device parses each piece of third information to obtain a device that has been offline and that is in the lower-level device of the first optical-electrical-optical device. The first optical-electrical-optical device determines the first information based on the identification information of the lower-level device that is of the optical line termination and that corresponds to each piece of fourth information, and the device that has been offline and that is in the lower-level device of the first optical-electrical-optical device, where the online device that is in the lower-level device of the first optical-electrical-optical device and that is indicated by the first information includes a device, in a lower-level device that is of the first optical-electrical-optical device and that corresponds to all fourth information, other than the device that has been offline and that is in the lower-level device of the first optical-electrical-optical device. In this way, the first optical-electrical-optical device can parse the fourth information and the third information, thereby obtaining identification information and status information of a device corresponding to second information and learning of a device that goes offline or goes online after the second information is received, to obtain the first information.

In a possible design solution, that the first optical-electrical-optical device sends, to the optical line termination in the optical network, the first information corresponding to the first optical-electrical-optical device may include: If the first optical-electrical-optical device determines that the online device in the lower-level device of the first optical-electrical-optical device changes, the first optical-electrical-optical device sends, to the optical line termination in the optical network, the first information corresponding to the first optical-electrical-optical device. In this way, the first optical-electrical-optical device can actively report the first information when the online device in the optical network changes, to feed back the first information in time, and reduce exchange complexity.

In a possible design solution, the method provided in the first aspect may further include: The first optical-electrical-optical device receives a first obtaining request from the optical line termination, where the first obtaining request indicates the first optical-electrical-optical device to send the first information. In this way, the optical line termination can actively obtain the first information. For example, based on data to be transferred, when there is no data transmission in the optical network, the OLT can avoid transmission of the first information, thereby reducing a transmission frequency of the first information, to reduce resource overheads.

Optionally, before the first optical-electrical-optical device receives the first obtaining request from the optical line termination, the method provided in the first aspect further includes: The first optical-electrical-optical device sends first alarm information to the optical line termination, where the first alarm information indicates the optical line termination to send the first obtaining request. In this way, when the lower-level device of the first optical-electrical-optical device changes, the optical line termination can be actively notified to obtain the first information, to feed back the first information in time.

In a possible design solution, the method provided in the first aspect may further include: The first optical-electrical-optical device receives a second obtaining request from the optical line termination, where the second obtaining request indicates to send identification information of the online device in the lower-level device of the first optical-electrical-optical device. In this way, the optical line termination can actively obtain the first information. For example, based on data to be transferred, when there is no data transmission in the optical network, the OLT can avoid transmission of the first information, thereby reducing a transmission frequency of the first information, to reduce resource overheads. In this way, the optical line termination can actively obtain the first information. For example, a reporting frequency of the first information may be reduced, to reduce the resource overheads.

Optionally, before the first optical-electrical-optical device receives the second obtaining request from the optical line termination, the method provided in the first aspect may further include: The first optical-electrical-optical device sends second alarm information to the optical line termination, where the second alarm information indicates the optical line termination to send the second obtaining request. In this way, when the lower-level device of the first optical-electrical-optical device changes, the optical line termination can be actively notified to obtain the first information, to feed back the first information in time.

According to a second aspect, a method for determining a network connection relationship is provided. The method for determining a network connection relationship includes: An optical line termination obtains first information corresponding to each of at least one first optical-electrical-optical device in an optical network, where the first information corresponding to the first optical-electrical-optical device indicates an online device in a lower-level device of the first optical-electrical-optical device, and the lower-level device of the first optical-electrical-optical device includes a second optical-electrical-optical device and/or an optical network termination. The optical line termination determines a connection relationship between cascaded devices in the optical network based on the first information corresponding to each of the at least one first optical-electrical-optical device.

Based on the method provided in the second aspect, the optical line termination may obtain the first information corresponding to each of the at least one first optical-electrical-optical device, and determine the connection relationship between the cascaded devices in the optical network based on the first information corresponding to each of the at least one first optical-electrical-optical device. In this way, the connection relationship between the cascaded devices in the optical network can be determined.

In a possible design solution, that the optical line termination obtains the first information corresponding to each of the at least one first optical-electrical-optical device in the optical network may include: The optical line termination receives, from the at least one first optical-electrical-optical device, the first information corresponding to each first optical-electrical-optical device. In this way, a calculation process on the optical line termination can be simplified, overheads of the optical line termination can be reduced, and running efficiency can be improved.

For example, before the optical line termination obtains the first information corresponding to each of the at least one first optical-electrical-optical device in the optical network, the method provided in the second aspect may further include: The optical line termination sends third information, where the third information is information for allocation of a time domain resource.

Optionally, the method provided in the second aspect may further include: The optical line termination sends a first obtaining request to each of the at least one first optical-electrical-optical device, where the first obtaining request indicates the first optical-electrical-optical device to send the first information. In this way, the optical line termination can actively obtain the first information. For example, a reporting frequency of the first information may be reduced, to reduce resource overheads.

Further, the method provided in the second aspect may further include: The optical line termination receives first alarm information from each of the at least one first optical-electrical-optical device, where the first alarm information indicates to send the first obtaining request. In this way, when the lower-level device of the first optical-electrical-optical device changes, the optical line termination can be actively notified to obtain the first information, to feed back the first information in time.

Optionally, the method provided in the second aspect further includes: The optical line termination sends a second obtaining request to each of the at least one first optical-electrical-optical device, where the second obtaining request indicates to send identification information of the online device in the lower-level device of the first optical-electrical-optical device.

Further, the method provided in the second aspect may further include: The optical line termination receives second alarm information from each of the at least one first optical-electrical-optical device, where the second alarm information indicates the optical line termination to send the second obtaining request.

In a possible design solution, that the optical line termination obtains the first information corresponding to each of the at least one first optical-electrical-optical device in the optical network may include: The optical line termination sends fifth information to each of the at least one first optical-electrical-optical device, where the fifth information indicates the first optical-electrical-optical device to disable an upstream optical module and/or a downstream optical module. The optical line termination receives sixth information corresponding to the fifth information, where the sixth information corresponding to the fifth information indicates an online optical network termination. The optical line termination determines, based on sixth information corresponding to each piece of fifth information, the first information corresponding to each first optical-electrical-optical device.

In a possible design solution, the method provided in the second aspect may further include: The optical line termination determines a faulty optical-electrical-optical device and/or optical network termination based on the connection relationship between the cascaded devices in the optical network.

According to a third aspect, a method for determining a network connection relationship is provided. The method for determining a network connection relationship includes: At least one first optical-electrical-optical device obtains first information corresponding to the first optical-electrical-optical device, where the first information corresponding to the first optical-electrical-optical device indicates an online device in a lower-level device of the first optical-electrical-optical device, and the lower-level device of the first optical-electrical-optical device includes a second optical-electrical-optical device and/or an optical network termination. Each of the at least one first optical-electrical-optical device sends, to an optical line termination in an optical network, first information corresponding to the first optical-electrical-optical device. The optical line termination receives, from the at least one first optical-electrical-optical device, the first information corresponding to each first optical-electrical-optical device. The optical line termination determines a connection relationship between cascaded devices in the optical network based on the first information corresponding to each of the at least one first optical-electrical-optical device.

In a possible design solution, that the at least one first optical-electrical-optical device obtains first information corresponding to the first optical-electrical-optical device may include: Each of at least one first optical-electrical-optical device receives at least one piece of second information, where the second information is information for physical layer operations, administration and maintenance, and one piece of second information corresponds to one lower-level device of the first optical-electrical-optical device. Each of the at least one first optical-electrical-optical device obtains the first information based on the at least one piece of second information.

Optionally, that each of the at least one first optical-electrical-optical device obtains the first information based on the at least one piece of second information may include: Each of the at least one first optical-electrical-optical device parses the at least one piece of second information to obtain identification information and status information of a device corresponding to each piece of second information. Each of the at least one first optical-electrical-optical device obtains the first information based on the identification information and the status information of the device corresponding to each piece of second information, where an online device that is in a lower-level device of the first optical-electrical-optical device and that is indicated by the first information includes a device whose status information is being online and that is in a device corresponding to the at least one piece of second information.

In a possible design solution, that the at least one first optical-electrical-optical device obtains the first information corresponding to the first optical-electrical-optical device may include: Each of the at least one first optical-electrical-optical device receives at least one piece of second information and third information, where the second information is information for physical layer operations, administration and maintenance, one piece of second information corresponds to one lower-level device of the first optical-electrical-optical device, and the third information is information for allocation of a time domain resource. Each of the at least one first optical-electrical-optical device obtains the first information based on the second information and the third information.

Optionally, that each of the at least one first optical-electrical-optical device obtains the first information based on the second information and the third information may include: Each of the at least one first optical-electrical-optical device parses each piece of second information to obtain identification information and status information of a device corresponding to the piece of second information. Each of the at least one first optical-electrical-optical device parses the third information to obtain a device that has been offline and that is in a lower-level device of the first optical-electrical-optical device. Each of the at least one first optical-electrical-optical device determines the first information based on the identification information and the status information of the device corresponding to each piece of second information, and the device that has been offline and that is in the lower-level device of the first optical-electrical-optical device, where an online device that is in the lower-level device of the first optical-electrical-optical device and that is indicated by the first information includes a device, in a device that corresponds to the at least one piece of second information and whose status information is being online, other than the device that has been offline and that is in the lower-level device of the first optical-electrical-optical device.

In a possible design solution, that the at least one first optical-electrical-optical device obtains the first information corresponding to the first optical-electrical-optical device may include: Each of the at least one first optical-electrical-optical device receives at least one piece of fourth information, where the fourth information is for carrying a data packet exchanged between the optical line termination and a lower-level device of the first optical-electrical-optical device, and the fourth information carries identification information of a device that sends the fourth information. Each of the at least one first optical-electrical-optical device receives third information from the optical line termination, where the third information is information for allocation of a time domain resource. Each of the at least one first optical-electrical-optical device obtains the first information based on the fourth information and the third information.

Optionally, that each of the at least one first optical-electrical-optical device obtains the first information based on the fourth information and the third information may include: Each of the at least one first optical-electrical-optical device parses the fourth information to obtain identification information of a lower-level device that is of the first optical-electrical-optical device and that corresponds to each piece of fourth information. Each of the at least one first optical-electrical-optical device parses each piece of third information to obtain a device that has been offline and that is in the lower-level device of the first optical-electrical-optical device. Each of the at least one first optical-electrical-optical device determines the first information based on the identification information of the lower-level device that is of the optical line termination and that corresponds to each piece of fourth information, and the device that has been offline and that is in the lower-level device of the first optical-electrical-optical device, where an online device that is in the lower-level device of the first optical-electrical-optical device and that is indicated by the first information includes a device, in a lower-level device that is of the first optical-electrical-optical device and that corresponds to all fourth information, other than the device that has been offline and that is in the lower-level device of the first optical-electrical-optical device.

In a possible design solution, that each of the at least one first optical-electrical-optical device sends, to the optical line termination in the optical network, the first information corresponding to the first optical-electrical-optical device may include: If the first optical-electrical-optical device determines that the online device in the lower-level device of the first optical-electrical-optical device changes, the first optical-electrical-optical device sends, to the optical line termination in the optical network, the first information corresponding to the first optical-electrical-optical device.

In a possible design solution, the method provided in the third aspect may further include: The optical line termination sends a first obtaining request to each of the at least one first optical-electrical-optical device, where the first obtaining request indicates the first optical-electrical-optical device to send the first information. Each of the at least one first optical-electrical-optical device receives the first obtaining request from the optical line termination.

Optionally, the method provided in the third aspect further includes: Each of the at least one first optical-electrical-optical device sends first alarm information to the optical line termination. The optical line termination receives the first alarm information from each of the at least one first optical-electrical-optical device, where the alarm information indicates to send the first obtaining request.

In a possible design solution, the method provided in the third aspect may further include: The optical line termination sends a second obtaining request to each of the at least one first optical-electrical-optical device, where the second obtaining request indicates to send identification information of the online device in the lower-level device of the first optical-electrical-optical device. Each of the at least one first optical-electrical-optical device receives the second obtaining request from the optical line termination.

Optionally, the method provided in the third aspect may further include: Each of the at least one first optical-electrical-optical device sends second alarm information to the optical line termination. The optical line termination receives the second alarm information from each of the at least one first optical-electrical-optical device, where the second alarm information indicates to send the second obtaining request.

In a possible design solution, the method provided in the third aspect may further include: The optical line termination determines a faulty optical-electrical-optical device and/or optical network termination based on the connection relationship between the cascaded devices in the optical network.

According to a fourth aspect, a communication apparatus is provided. The communication apparatus is configured to perform the method for determining a network connection relationship according to any one of the implementations of the first aspect and the second aspect.

In this application, the communication apparatus according to the fourth aspect may be the first optical-electrical-optical device according to the first aspect or the optical line termination according to the second aspect, a chip (a system) or another part or component that may be disposed in the first optical-electrical-optical device or the optical line termination, or an apparatus including the first optical-electrical-optical device or the optical line termination.

It should be understood that the communication apparatus according to the fourth aspect includes a corresponding module, unit, or means (means) for implementing the method for determining a network connection relationship according to any one of the first aspect and the second aspect. The module, the unit, or the means may be implemented by hardware, software, or hardware executing corresponding software. The hardware or the software includes one or more modules or units configured to perform a function in the foregoing method for determining a network connection relationship.

According to a fifth aspect, a communication apparatus is provided. The communication apparatus includes a processor. The processor is configured to perform the method for determining a network connection relationship according to any one of the possible implementations of the first aspect and the second aspect.

In a possible design solution, the communication apparatus according to the fifth aspect may further include a transceiver. The transceiver may be a transceiver circuit or an interface circuit. The transceiver and the processor may be connected to each other through a line. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. Optionally, the memory may be configured to store a computer program and/or data in the method for determining a network connection relationship according to any one of the first aspect and the second aspect.

In this application, the communication apparatus according to the fifth aspect may be the first optical-electrical-optical device according to the first aspect or the optical line termination according to the second aspect, a chip (a system) or another part or component that may be disposed in the first optical-electrical-optical device or the optical line termination, or an apparatus including the first optical-electrical-optical device or the optical line termination.

According to a sixth aspect, a communication apparatus is provided. The communication apparatus includes a processor. The processor is coupled to a memory. The processor is configured to perform the method for determining a network connection relationship according to any one of the first aspect and the second aspect.

A computer program stored in the memory enables the communication apparatus to perform the method for determining a network connection relationship according to any one of the possible implementations of the first aspect and the second aspect.

Optionally, the memory may be configured to store a computer program and/or data in the method for determining a network connection relationship according to any one of the first aspect and the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be the first optical-electrical-optical device according to the first aspect or the optical line termination according to the second aspect, a chip (a system) or another part or component that may be disposed in the first optical-electrical-optical device or the optical line termination, or an apparatus including the first optical-electrical-optical device or the optical line termination.

According to a seventh aspect, a communication apparatus is provided, and includes a processor and a memory. The memory is configured to store a computer program. When the processor executes the computer program, the communication apparatus is enabled to perform the method for determining a network connection relationship according to any one of the implementations of the first aspect and the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the first optical-electrical-optical device according to the first aspect or the optical line termination according to the second aspect, a chip (a system) or another part or component that may be disposed in the first optical-electrical-optical device or the optical line termination, or an apparatus including the first optical-electrical-optical device or the optical line termination.

According to an eighth aspect, a communication apparatus is provided, and includes a processor. The processor is configured to: after being coupled to a memory and reading a computer program in the memory, perform the method for determining a network connection relationship according to any one of the implementations of the first aspect and the second aspect based on the computer program.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be the first optical-electrical-optical device according to the first aspect or the optical line termination according to the second aspect, a chip (a system) or another part or component that may be disposed in the first optical-electrical-optical device or the optical line termination, or an apparatus including the first optical-electrical-optical device or the optical line termination.

In addition, for technical effects of the communication apparatuses according to the fourth aspect to the eighth aspect, refer to the technical effects of the methods for determining a network connection relationship according to the first aspect and the second aspect. Details are not described herein again.

According to a ninth aspect, a processor is provided. The processor is configured to perform the method for determining a network connection relationship according to any one of the possible implementations of the first aspect and the second aspect.

According to a tenth aspect, a communication system is provided. The communication system includes an optical line termination and one or more optical-electrical-optical devices.

The optical-electrical-optical device may be configured to perform the method according to any one of the first aspect, and the optical line termination may be configured to perform the method according to any one of the implementations of the second aspect.

Optionally, the communication system may further include an optical network termination.

According to an eleventh aspect, a computer-readable storage medium is provided, and includes a computer program or instructions. When the computer program or the instructions are run on a computer, the computer is enabled to perform the method for determining a network connection relationship according to any one of the possible implementations of the first aspect and the second aspect.

According to a twelfth aspect, a computer program product is provided, and includes a computer program or instructions. When the computer program or the instructions are run on a computer, the computer is enabled to perform the method for determining a network connection relationship according to any one of the possible implementations of the first aspect and the second aspect.

### BRIEF DESCRIPTION OF DRAWINGS

FIG. 1 is a diagram of a connection architecture of an optical network according to an embodiment of this application;
FIG. 2 is a diagram of a structure of an optical-electrical-optical device according to an embodiment of this application;
FIG. 3 is a diagram of an architecture of a communication system according to an embodiment of this application;
FIG. 4 is a schematic flowchart of a method for determining a network connection relationship according to an embodiment of this application;
FIG. 5 is a diagram of relationships between a first optical-electrical-optical device and a lower-level device according to an embodiment of this application;
FIG. 6 is a diagram of a connection relationship between cascaded devices according to an embodiment of this application;
FIG. 7 is a diagram of a connection relationship between devices in a communication system according to an embodiment of this application;
FIG. 8 is a schematic flowchart of another method for determining a network connection relationship according to an embodiment of this application;
FIG. 9 is a diagram of a frame structure of a packet according to an embodiment of this application;
FIG. 10 is a schematic flowchart of another method for determining a network connection relationship according to an embodiment of this application;
FIG. 11 is a schematic flowchart of another method for determining a network connection relationship according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are for representing giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

The network architecture and the service scenario that are described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of the new service scenario, the technical solutions provided in embodiments of this application are also applicable to similar technical problems.

The following describes the technical solutions in this application with reference to accompanying drawings.

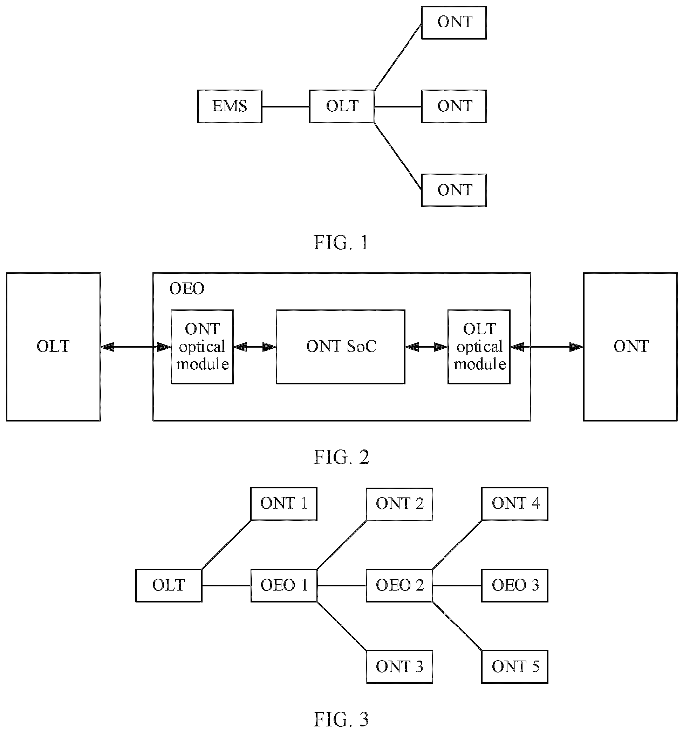

With ongoing growth of bandwidth requirements of users, fiber to the x is currently a mainstream of an access network, and a passive optical network is particularly more competitive. FIG. 1 is a diagram of a structure of a passive optical network (passive optical network, PON) communication system, including an OLT and one or more ONTs. The ONT may alternatively be an ONU. A communication connection may be established between each ONT and the OLT.

In the communication system shown in FIG. 1, a round trip delay (round trip delay, RTD) between the OLT and the ONT may be obtained through measurement, to obtain a physical reach between the OLT and each ONU through calculation.

Optionally, the passive optical network system shown in FIG. 1 may further include an element management system (element management system, EMS). A communication connection may be established between the EMS and the OLT.

To resolve problems in scenarios of mines, electric power, transportation networking, and the like in which a long reach, a plurality of nodes, uneven optical splitting, and the like are needed, a long reach passive optical network optical-electrical-optical (long reach PON optical-electrical-optical, LR PON OEO) device (which may also be referred to as an optical-electrical-optical (optical-electrical-optical, OEO) device) is proposed. Unless otherwise specified, OEO represents an OEO device below.

For example, as shown in FIG. 2, an OEO may include an ONT system-on-chip (SoC), an ONT optical module, and an OLT optical module, where both the ONT optical module and the OLT optical module are in communication connections to the ONT SoC. The ONT optical module is located in an upstream direction of the ONT SoC, and is configured to connect to an OLT or an upper-level OEO. The OLT optical module is located in a downstream direction of the ONT SoC, and is configured to connect to a lower-level device of the OEO, for example, an ONT or another OEO.

In some embodiments, for a scenario of a one-level PON device, a lower-level device of an OLT in an optical network is directly connected to the OLT. Therefore, the OLT may obtain a connection relationship between devices in the optical network. In other words, the OLT may obtain a topology structure of the devices in the optical network. When a plurality of devices are cascaded in an optical network, for example, in a case in which an OLT is connected to an optical-electrical-optical (optical-electrical-optical, OEO) device and the OEO is connected to an ONT, a network including the devices in the optical network has a daisy chain topology (daisy chain topology) structure. Both the OEO and the ONT are lower-level devices of the OLT. A solution used by the OLT in a one-level PON to determine the connection relationship between the devices is not applicable. In other words, a solution for obtaining the topology structure of the one-level PON network cannot be used for obtaining a topology structure in a cascading scenario of a multilevel PON. Therefore, how to obtain a connection relationship between devices in the cascading optical network is an urgent problem to be resolved.

To resolve the foregoing technical problem, embodiments of this application provide a method for determining a network connection relationship. In the method, an OLT device may obtain first information corresponding to at least one first OEO in an optical network, and obtain a connection relationship between cascaded devices in the optical network based on the first information, where the first information corresponding to the first OEO indicates an online device in a lower-level device of the first OEO, and the lower-level device of the first OEO includes a second OEO and/or an ONT. In this way, a terminal device can obtain the connection relationship between the cascaded devices in the optical network, that is, obtain a topology structure of the cascaded devices in the optical network. With reference to specific embodiments, the following explains the method provided in this application.

The solutions provided in embodiments of this application may be applied to a communication system. As shown in FIG. 3, the communication system may include an OLT, at least one OEO (OEO 1 to OEO 3), and at least one ONT (ONT 1 to ONT 5). A communication connection may be established between the OLT and the OEO, a communication connection may be established between the OLT and the ONT, and a communication connection may be established between the OEO and the ONT. For example, ONT 1 may establish a communication connection to the OLT, OEO 1 may establish a communication connection to the OLT, OEO 1 may further separately establish a communication connection to ONT 2, ONT 3, and OEO 2, and OEO 2 may further separately establish a communication connection to ONT 4, ONT 5, and OEO 3.

The OLT is a device configured to connect to a fiber feeder, or a chip (a system) or another part or component that may be disposed in the device.

The OEO is a device configured to amplify an optical signal, or a chip (a system) or another part or component that may be disposed in the device.

In the communication system in FIG. 3, a network including devices in an optical network has a daisy chain topology.

It should be noted that the method for determining a network connection relationship provided in embodiments of this application is applicable to the OLT shown in FIG. 3, or is applicable to the OLT and the OEO shown in FIG. 3. For a specific implementation, refer to the following method embodiments. Details are not described herein again.

It should be noted that, the solutions in embodiments of this application may alternatively be applied to another communication system, and a corresponding name may alternatively be replaced with a name of a corresponding function in the another communication system.

It should be understood that FIG. 3 is merely a simplified example diagram for ease of understanding. The communication system may further include another device that is not shown in FIG. 3.

The communication system shown in FIG. 3 may also be referred to as an optical network communication system or an optical network system, and a network structure for communication between devices in the communication system may be referred to as an optical network.

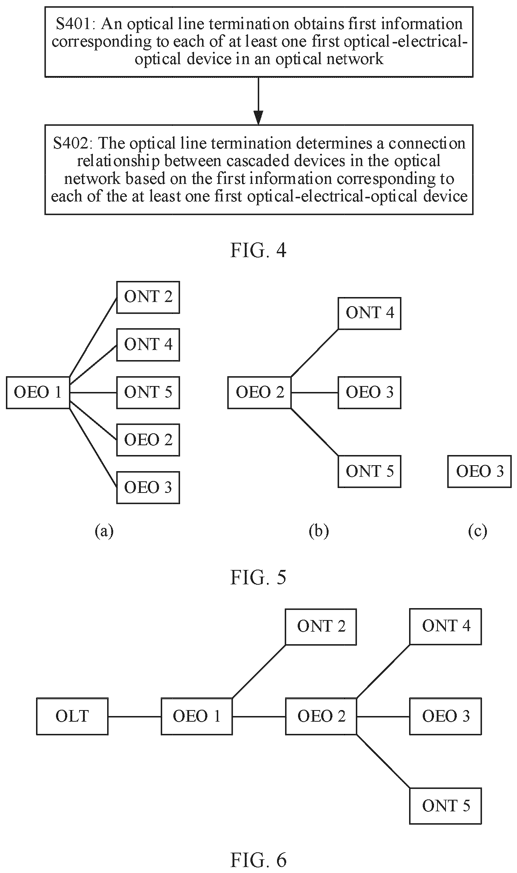

With reference to FIG. 4 to FIG. 11, the following specifically describes the method for determining a network connection relationship provided in embodiments of this application.

For example, FIG. 4 is a schematic flowchart of a method for determining a network connection relationship according to an embodiment of this application. The method for determining a network connection relationship is applicable to the OLT and any OEO shown in FIG. 3.

As shown in FIG. 4, the method for determining a network connection relationship includes the following steps.

S401: An OLT obtains first information corresponding to each of at least one first OEO in an optical network.

The first information corresponding to the first OEO indicates an online device in a lower-level device of the first OEO, and the lower-level device of the first OEO includes a second OEO and/or an ONT. The at least one first OEO may be all OEOs that are online without disabling upstream optical modules or downstream optical modules in the OEOs in the optical network.

A lower-level device of a device includes a device that can receive a downstream signal sent by the device. For example, the lower-level device of the first OEO may be the second OEO or the ONT that can receive downstream information sent by the first OEO. The communication system shown in FIG. 3 is used as an example. If the at least one first OEO includes OEO 1 to OEO 3, ONT 2, ONT 4, and ONT 5, first information corresponding to OEO 1 indicates that online devices in lower-level devices of OEO 1 include OEO 2, OEO 3, ONT 2, ONT 4, and ONT 5, first information corresponding to OEO 2 indicates that online devices in lower-level devices of OEO 2 include OEO 3, ONT 4, and ONT 5, and first information corresponding to OEO 3 indicates that there is no online lower-level device for the OEO3.

It may be understood that, in some possible embodiments, a lower-level device may also be referred to as a connected device.

For a specific implementation principle of S401, refer to S801 and S802 below, S1001 to S1004 below, or S1101 and S1102 below.

S402: The OLT determines a connection relationship between cascaded devices in the optical network based on the first information corresponding to each of the at least one first OEO.

In other words, the OLT obtains a topology structure of the cascaded devices in the optical network based on the first information corresponding to each of the at least one first OEO. It may be understood that the connection relationship may also be referred to as the topology structure, and obtaining the connection relationship may also be understood as obtaining the topology structure. In the following embodiments, the connection relationship is used for description unless otherwise specified.

The cascaded devices in the optical network may be devices connected to an OEO or an ONT, in the optical network, other than the OLT. For example, in the communication system shown in FIG. 3, OEO 1 and the lower-level devices of OEO 1 are cascaded devices.

The communication system shown in FIG. 3 is used as an example. If OEO 1 is a first OEO, the first information corresponding to OEO 1 indicates that the online devices in the lower-level devices of OEO 1 include OEO 2, OEO 3, ONT 2, ONT 4, and ONT 5, the first information corresponding to OEO 2 indicates that the online devices in the lower-level devices of OEO 2 include OEO 3, ONT 4, and ONT 5, and the first information corresponding to OEO 3 indicates that there is no online lower-level device for OEO 3, the OLT may obtain, based on the first information corresponding to OEO 1, a connection relationship shown in (a) in FIG. 5, the OLT may obtain, based on the first information corresponding to OEO 2, a connection relationship shown in (b) in FIG. 5, and the OLT may obtain, based on the first information corresponding to OEO 3, a connection relationship shown in (c) in FIG. 5. Based on the relationships shown in (a) in FIG. 5 to (c) in FIG. 5, the OLT may determine that the connection relationship between the cascaded devices is shown in FIG. 6.

Based on the method for determining a network connection relationship shown in FIG. 4, the OLT may obtain the first information corresponding to each of the at least one first OEO, and determine the connection relationship between the cascaded devices in the optical network based on the first information, where the first information indicates the online device in the lower-level device of the first OEO. In this way, the OLT can obtain information about the online device in the lower-level device of the first OEO, and further obtain the connection relationship between the cascaded devices in the optical network.

For the OLT, the OLT may obtain identification information of all OEOs and/or ONTs connected to the OLT. In other words, the OLT may determine all lower-level devices of the OLT. The communication system shown in FIG. 3 is used as an example. The OLT may obtain identification information of ONT 1 to ONT 5 and identification information of OEO 1 to OEO 3. In other words, the OLT may determine that the lower-level devices of the OLT include ONT 1 to ONT 5, and OEO 1 to OEO 3. The OLT may obtain the identification information of the lower-level devices of the OLT by using a conventional technology. Details are not described herein.

In this embodiment of this application, step 4.1 may be further included.

Step 4.1: The OLT receives upstream information from an ONT directly connected to the OLT, where the upstream information may be carried in a 10-gigabit-capable passive optical network transmission convergence (10-gigabit-capable passive optical network transmission convergence, XGTC) frame or a gigabit-capable passive optical network transmission convergence (gigabit-capable passive optical network transmission convergence, GTC) frame. For example, the upstream information may be information including a physical layer operations, administration and maintenance (physical layer operations, administration and maintenance, PLOAM) message.

In this embodiment of this application, both a sequence of performing step 4.1 and S401 and a sequence of performing step 4.1 and S402 are not limited. For example, step 4.1 may be performed before S401 or after S401, or may be performed in a process of performing S401. Step 4.1 may be performed before S402 or after S402, or may be performed in a process of performing S402.

Step 4.2: The OLT determines, based on the upstream information of the ONT directly connected to the OLT, an online ONT in the ONT directly connected to the OLT.

For example, the OLT may parse the upstream information of the ONT to obtain identification information and status information of the ONT. For a specific implementation principle, refer to an existing implementation in which the OLT parses the upstream information of the ONT. For example, if the upstream information is the PLOAM message, refer to an implementation principle of step 8.2-1.

In this embodiment of this application, both a sequence of performing step 4.2 and S401 and a sequence of performing step 4.2 and S402 are not limited. For example, step 4.2 may be performed before S401 or after S401, or may be performed in a process of performing S401. Step 4.2 may be performed before S402 or after S402, or may be performed in a process of performing S402.

On this basis, the OLT may further perform step 4.3 below based on the connection relationship that is between the cascaded devices in the optical network and that is determined in S402 above.

Step 4.3: The OLT determines a connection relationship between devices in the entire optical network with reference to the connection relationship between the cascaded devices in the optical network and the upstream information of the ONT directly connected to the OLT. Descriptions are provided below with reference to FIG. 3, FIG. 10, and FIG. 11.

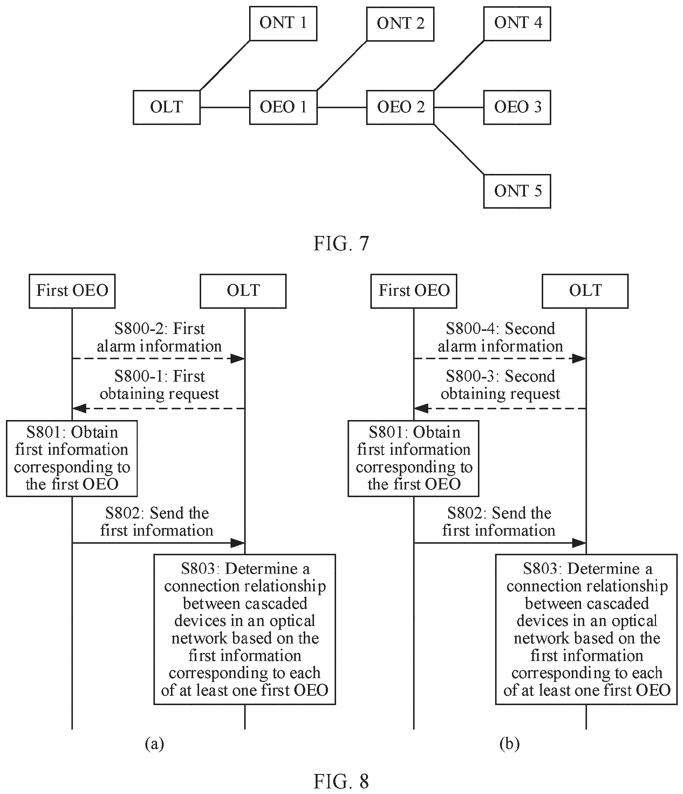

If the lower-level devices of the OLT include ONT 1 to ONT 5, and OEO 1 to OEO 3, the OLT determines the connection relationship between the cascaded devices, as shown in FIG. 6. If the ONT 1 is online, the OLT may further determine the connection relationship between the devices in the optical network, as shown in FIG. 7.

To reduce complexity of an exchange procedure and reduce resource consumption, in some possible embodiments, a first OEO may parse at least a part of content in information (for example, a protocol packet) that passes through the first OEO, thereby obtaining, from information obtained through parsing, identification information of a lower-level device of the first OEO, to obtain first information, and send the first information to the OLT. Then, the OLT determines the connection relationship between the devices in the optical network based on the first information of each first OEO in the optical network. Descriptions are provided below with reference to FIG. 8.

FIG. 8 is a schematic flowchart of another method for determining a network connection relationship according to an embodiment of this application. As shown in FIG. 8, the method for determining a network connection relationship includes the following steps.

S801: Each of at least one first OEO obtains first information corresponding to the first OEO.

The first information corresponding to the first OEO indicates an online device in a lower-level device of the first OEO, and the lower-level device of the first OEO includes a second OEO and/or an ONT.

For the at least one first OEO, refer to the related descriptions of the at least one first OEO in S401 above. For related descriptions of the lower-level device, refer to the related descriptions of the lower-level device in S401 above. Details are not described herein again.

S801 includes: Each first OEO in an optical network obtains the first information corresponding to the first OEO. In other words, for each of the at least one first OEO, the first OEO may perform the following step: The first OEO obtains the first information corresponding to the first OEO.

The communication system shown in FIG. 3 is used as an example. If OEO 1 to OEO 3 are all online, the at least one first OEO includes OEO 1 to OEO 3. That each of the at least one first OEO obtains the first information corresponding to the first OEO may include: OEO 1 obtains first information corresponding to OEO 1, OEO 2 obtains first information corresponding to OEO 2, and OEO 3 obtains first information corresponding to OEO 3.

A principle of obtaining, by the first OEO, the first information corresponding to the first OEO is described below by using examples with reference to different obtaining manners.

Obtaining manner 1: That the first OEO obtains the first information corresponding to the first OEO may include the following steps.

Step 8.1: The first OEO receives at least one piece of second information.

The second information is information for physical layer operations, administration and maintenance, and one piece of second information corresponds to one lower-level device of the first OEO.

An example is used with reference to the communication system shown in FIG. 3. If the first OEO is OEO 2, the at least one piece of second information includes three pieces of second information: second information corresponding to ONT 4, second information corresponding to OEO 3, and second information corresponding to ONT 5.

For example, the second information may be information including a physical layer operations, administration and maintenance (physical layer operations, administration and maintenance, PLOAM) message. The second information may be carried in an XGTC frame or a GTC frame.

The PLOAM message may include one of the following: a message for enabling a device (ONT or OEO) to enter an initial state (O1) (for example, a broadcast request for deactivating an ONU-ID, a request for deactivating an ONU-ID, or a request for activating a serial number), a message for enabling a device (ONT or OEO) to enter a serial number state (O2-3) (a request for disabling a serial number), a message for enabling a device (ONT or OEO) to enter a ranging state (O4) (for example, ID PLOAM), a message for enabling a device (ONT or OEO) to enter an operation state (O5) (ranging time (ranging_time) PLOAM), a message for enabling a device (ONT or OEO) to enter an intermittent loss of downstream synchronization (loss of downstream synchronization, LODS) state (O6), and a message for enabling a device (ONT or OEO) to enter an emergency stop state (O7). For a specific implementation principle of the PLOAM message, refer to clause 11 of the protocol version G.987.3. Details are not described herein.

Step 8.2: The first OEO obtains the first information based on the at least one piece of second information.

In this way, the first OEO can determine, based on the information for physical layer operations, administration and maintenance, the lower-level device corresponding to the first OEO, to obtain the first information, so that an existing message in the optical network can be reused, to simplify an exchange procedure.

Optionally, step 8.2 may include step 8.2-1 and step 8.2-2.

Step 8.2-1: The first OEO parses the at least one piece of second information to obtain identification information and status information of a device corresponding to each piece of second information.

For example, the first OEO may parse a PLOAM message field in the XGTC frame to obtain the PLOAM message. The first OEO may determine, based on a state that the device is indicated to enter in the PLOAM message, whether the device is online or offline. For example, if the first OEO receives the message for enabling the device (ONT or OEO) to enter the operation state (O5), it may be considered that status information of the device is being online; or if the first OEO receives a PLOAM message other than the message for enabling the device (ONT or OEO) to enter the operation state (O5), it may be considered that status information of the device corresponding to the PLOAM message is being offline.

Step 8.2-2: The first OEO obtains the first information based on the identification information and the status information of the device corresponding to each piece of second information.

The online device that is in the lower-level device of the first OEO and that is indicated by the first information includes a device whose status information is being online and that is in a device corresponding to the at least one piece of second information.

With reference to the communication system shown in FIG. 3, it is assumed that the first OEO is OEO 2. If OEO 2 parses second information of lower-level devices of OEO 2 to learn that status information of ONT 4 is being online, that status information of OEO 3 is being online, and that status information of ONT 5 is being offline, the first information corresponding to OEO 2 indicates that online lower-level devices in the lower-level devices of OEO 2 include ONT 4 and OEO 3.

In this way, the first OEO can parse the second information that passes through the first OEO, thereby obtaining identification information and status information of the device corresponding to the second information, to obtain the first information.

Obtaining manner 2: That the first OEO obtains the first information corresponding to the first OEO may include step 8.3 and step 8.4.

Step 8.3: An OLT sends third information, and the first OEO receives at least one piece of second information and the third information.

The second information is information for physical layer operations, administration and maintenance, one piece of second information corresponds to one lower-level device of the first OEO, and the third information is information for allocation of a time domain resource.

For an implementation principle of the second information, refer to the related descriptions of the second information in step 8.1. Details are not described herein again.

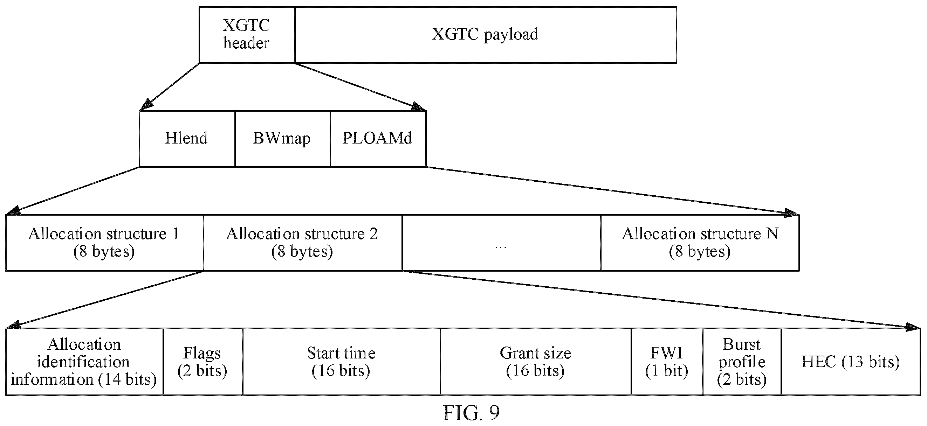

The third information may be carried in an XGTC frame or a GTC frame. As shown in FIG. 9, an example in which the third information is carried in the XGTC frame is used. If the XGTC frame includes an XGTC header (header) and an XGTC payload (payload), and the XGTC header may include a header length (Hlend) field (partition), a BWmap field, and a PLOAMd field, the third information may be carried in the BWmap field in the XGTC header. The BWmap field includes an allocation structure (allocation structure) corresponding to each online device in the optical network, and each allocation structure corresponds to 8 bytes (bytes). Each allocation structure includes an allocation identification information (Alloc-ID) field (field) (14 bits (bits)), a flags (Flags) field (2 bits), a start time (StartTime) field (16 bits), a grant size (GrantSize) field (16 bits), a forced wake-up indication (forced wake-up indication, FWI) bit (bit) (one bit), a burst profile (BurstProfile) field (2 bits), and a header error control (header error control, HEC) field (13 bits).

Step 8.4: The first OEO obtains the first information based on the second information and the third information.

In this way, the first OEO can determine, based on the second information and the third information, the lower-level device corresponding to the first OEO, to obtain the first information, so that an existing message in the optical network can be reused, to simplify an exchange procedure.

Optionally, that the first OEO obtains the first information based on the second information and the third information may include step 8.4-1 to step 8.4-3.

Step 8.4-1: The first OEO parses each piece of second information to obtain identification information and status information of a device corresponding to the piece of second information.

For an implementation principle of step 8.4-1, refer to the related descriptions in step 8.2-1. Details are not described herein again.

Step 8.4-2: The first OEO parses the third information to obtain a device that has been offline and that is in the lower-level device of the first OEO.

For example, the third information is the XGTC frame for carrying a BWmap message. The first OEO may parse the allocation identification information field of the BWmap message in the XGTC frame to obtain identification information of a device to which the OLT allocates the time domain resource. In this way, the first OEO can learn of a device that has been offline or a device that is newly online.

Step 8.4-3: The first OEO determines the first information based on the identification information and the status information of the device corresponding to each piece of second information, and the device that has been offline and that is in the lower-level device of the first OEO.

The online device that is in the lower-level device of the first OEO and that is indicated by the first information includes a device, in a device that corresponds to the at least one piece of second information and whose status information is being online, other than the device that has been offline and that is in the lower-level device of the first OEO.

The communication system shown in FIG. 3 is used as an example. If lower-level devices of the OLT are all online at a time point T1, and the time domain resource (which may also be referred to as a slot) is allocated to ONT 2 to ONT 4, and OEO 1 to OEO 3 by using the BWmap message at a time point T2, it may be determined that offline devices in the communication system include ONT 2 and the ONT 1. In this way, the first information corresponding to each first OEO can be determined with reference to the obtained second information of the lower-level device of each first OEO and the device that has been offline in the optical network. For example, OEO 1 is a first OEO. In this case, OEO 1 may learn, based on each piece of second information, that devices connected to OEO 1 at the time point T1 include ONT 2 to ONT 4, OEO 2, and OEO 3. At the time point T2, OEO 1 learns, based on the BWmap message, that ONT 2 has been offline, thereby determining that ONT 3, ONT 4, OEO 2, and OEO 3 in the lower-level devices of OEO 1 are online. In this way, the first information of OEO 1 can be obtained.

In this way, the first OEO can parse the second information and the third information that pass through the first OEO, thereby obtaining identification information and status information of a device corresponding to the second information and learning of a device that goes offline or goes online after the second information is received, to obtain the first information.

Obtaining manner 3: That the first OEO obtains the first information corresponding to the first OEO may include step 8.5 to step 8.7.

Step 8.5: The first OEO receives at least one piece of fourth information.

The fourth information is for carrying a data packet exchanged between an OLT and the lower-level device of the first OEO, and the fourth information carries identification information of a device that sends the fourth information.

Step 8.6: The first OEO receives third information from the OLT.

The third information is information for allocation of a time domain resource.

Step 8.7: The first OEO obtains the first information based on the fourth information and the third information.

In this way, the first OEO can determine, based on the fourth information and the third information, the lower-level device corresponding to the first OEO, to obtain the first information, so that an existing message in the optical network can be reused, to simplify an exchange procedure.

Optionally, that the first OEO obtains the first information based on the fourth information and the third information may include step 8.7-1 to step 8.7-3.

Step 8.7-1: The first OEO parses the fourth information to obtain identification information of a lower-level device that is of the first OEO and that corresponds to each piece of fourth information.

Step 8.7-2: The first OEO parses each piece of third information to obtain a device that has been offline and that is in the lower-level device of the first OEO.

Step 8.7-3: The first OEO determines the first information based on the identification information of the lower-level device that is of the OLT and that corresponds to each piece of fourth information, and the device that has been offline and that is in the lower-level device of the first OEO.

For a specific implementation principle of step 8.7-3, refer to the related descriptions in step 8.4-3 above. Details are not described herein again.

The online device that is in the lower-level device of the first OEO and that is indicated by the first information includes a device, in a lower-level device that is of the first OEO and that corresponds to all fourth information, other than the device that has been offline and that is in the lower-level device of the first OEO.

In this way, the first OEO can parse the fourth information and the third information, thereby obtaining identification information and status information of a device corresponding to second information and learning of a device that goes offline or goes online after the second information is received, to obtain the first information.

It should be noted that, in this embodiment of this application, the first OEO may further determine the first information with reference to the fourth information and the second information. A specific principle is not described herein again.

S802: Each of the at least one first OEO sends, to the OLT in the optical network, the first information corresponding to the first OEO. Accordingly, the OLT obtains the first information corresponding to each of the at least one first OEO in the optical network.

S802 includes: Each first OEO in the optical network sends, to the OLT, the first information corresponding to the first OEO. In other words, for each of the at least one first OEO, the first OEO may perform the following step: The first OEO sends, to the OLT in the optical network, the first information corresponding to the first OEO. Accordingly, the OLT receives the first information corresponding to each of the at least one first OEO in the optical network.

With reference to the communication system that is shown in FIG. 3 and that is used as an example, if the at least one first OEO includes OEO 1 to OEO 3, S802 includes: OEO 1 sends, to the OLT, the first information corresponding to OEO 1, OEO 2 sends, to the OLT, the first information corresponding to OEO 2, and OEO 3 sends, to the OLT, the first information corresponding to OEO 3. Accordingly, the OLT receives the first information corresponding to OEO 1, the first information corresponding to OEO 2, and the first information corresponding to OEO 3.

For example, each of the at least one first OEO may report the first information by using an ONT management and control interface (ONT management and control interface, OMCI) message or the PLOAM message. The OMCI message may include one or more of the following: a get (get) message, a get response (get response) message, an alarm (alarm) message, an attribute value change (attribute value change, AVC) message, and a get next (get next) message.

With reference to any one of the following reporting manner 1 to reporting manner 5, that each of the at least one first OEO sends, to the OLT, the first information corresponding to the first OEO is described below. Different first OEOs in the at least one first OEO may use a same reporting manner or different reporting manners.

The following describes, with reference to the reporting manner 1 to the reporting manner 5, how a first OEO reports first information to the OLT device.

Reporting manner 1: The first OEO may actively report the first information to the OLT when a lower-level device of the first OEO changes, for example, there is a lower-level device that is newly online or a lower-level device that has been online goes offline. In this case, that the first OEO sends, to the OLT in the optical network, the first information corresponding to the first OEO may include: If the first OEO determines that an online device in the lower-level device of the first OEO changes, the first OEO sends, to the OLT in the optical network, the first information corresponding to the first OEO. Accordingly, the OLT obtains the first information corresponding to the first OEO.

That the online device in the lower-level device of the first OEO changes may mean that identification information of the online device in the lower-level device of the first OEO changes. For example, there is a newly online device in the optical network, or a device in the online devices goes offline.

With reference to the communication system that is shown in FIG. 3 and that is used as an example, it is assumed that the first OEO is OEO 1, and OEO 1 to OEO 3, ONT 2, ONT 4 and ONT 5 are all online. If OEO 1 detects that ONT 3 goes online, OEO 1 may send the first information to the OLT. Alternatively, if OEO 1 detects that any device in OEO 2, OEO 3, ONT 2, ONT 4 and ONT 5 goes offline, OEO 1 may send the first information to the OLT. Accordingly, the OLT may receive the first information corresponding to OEO 1.

It may be understood that the first information may be carried in the AVC message. In this case, the AVC message may include the identification information of the online device in the lower-level device of the first OEO. In the AVC message, identification information of each device may be indicated by using a plurality of bits, or in other words, indicated by using a bitmap (bitmap). For example, if lower-level devices of one first OEO include a device 0 to a device 3 (identification information is 145, 3, 5, and 8 in sequence) in total, the device 0 and the device 1 are online, and the device 2 and the device 3 have been offline, bitmaps corresponding to the device 0 to the device 3 in the AVC message are "10010001", "00000001", "00000000", and "00000000" in sequence.

In this way, the first OEO can actively report the first information when the online device in the optical network changes, to feed back the first information in time, and reduce exchange complexity.

Reporting manner 2: The OLT may actively request the first OEO to report the first information. In this case, as shown in (a) in FIG. 8, before S802, the method shown in FIG. 8 may further include S800-1: The OLT sends a first obtaining request to each of the at least one first OEO. Accordingly, the first OEO receives the first obtaining request from the OLT.

The first obtaining request indicates the first OEO to send the first information. For example, the first obtaining request may be the get message.

In this way, after receiving the first obtaining request, the first OEO may send the first information to the OLT. In this way, the optical line termination can actively obtain the first information. For example, based on data to be transferred, when there is no data transmission in the optical network, the OLT can avoid transmission of the first information, thereby reducing a transmission frequency of the first information, to reduce resource overheads.

Reporting manner 3: As shown in (a) in FIG. 8, the manner includes the step in the reporting manner 2; and before the first OEO receives the first obtaining request from the OLT, the method shown in FIG. 8 may further include S800-2: The first OEO sends first alarm information to the OLT. Accordingly, the OLT receives the first alarm information from the first OEO.

The first alarm information indicates to send the first obtaining request.

The first alarm information may be the alarm message.

It may be understood that, if the first OEO determines that the online device in the lower-level device of the first OEO changes, the first OEO sends the first alarm information to the OLT.

In this way, when the lower-level device of the first optical-electrical-optical device changes, the optical line termination can be actively notified to obtain the first information, to feed back the first information in time.

Reporting manner 4: As shown in (b) in FIG. 8, the method shown in FIG. 8 may further include S800-3: The OLT sends a second obtaining request to the first OEO. Accordingly, the first OEO receives the second obtaining request from the OLT.

The second obtaining request indicates to send identification information of an online device in a lower-level device of the first OEO.

For example, the second obtaining request may be the get message or the get next message. If the first OEO obtains identification information of a 1^{st} online lower-level device of the first OEO in the first information, the second obtaining request may be the get message. If the first OEO obtains identification information of a non-1^{st} online lower-level device of the first OEO in the first information, the second obtaining request may be the get next message.

In this way, the optical line termination can actively obtain the first information. For example, based on data to be transferred, when there is no data transmission in the optical network, the OLT can avoid transmission of the first information, thereby reducing a transmission frequency of the first information, to reduce resource overheads.

It may be understood that, before S800-3, the OLT may further send a get message to the first OEO, where the get message indicates to feed back a quantity of online devices in the lower-level device of the first OEO. In this case, a quantity of second obtaining requests corresponding to the first OEO may be the same as the quantity of online devices in the lower-level device of the first OEO.

Each second obtaining request corresponds to identification information of one online device. In other words, each second obtaining request is for obtaining the identification information of the online device.

Reporting manner 5: As shown in (b) in FIG. 8, the manner includes the step in the reporting manner 4; and before the first OEO receives the second obtaining request from the OLT, the method shown in FIG. 8 may further include S800-4: The first OEO sends second alarm information to the OLT. The OLT receives second alarm information from each of the at least one first OEO. The second alarm information indicates the OLT to send the second obtaining request.

The second alarm information may be the alarm message.

For an implementation principle of the second alarm information, refer to the implementation principle of the first alarm information. Details are not described herein again.

In this way, when the lower-level device of the optical-electrical-optical device changes, the optical line termination can be actively notified to obtain the first information, to feed back the first information in time.

It may be understood that different first OEOs in one communication network may all report the first information in any one of the foregoing reporting manner 1 to reporting manner 5.

S803: The OLT determines a connection relationship between cascaded devices in the optical network based on the first information corresponding to each of the at least one first OEO.

For a specific implementation principle of S803, refer to S402 above. Details are not described herein again.

For technical effects of the method shown in FIG. 8, refer to the technical effects of the method shown in FIG. 4. Details are not described herein again. In addition, according to the method shown in FIG. 8, a calculation process on the OLT can be further simplified, overheads of the OLT can be reduced, and running efficiency can be improved.

In a possible design solution, the method shown in FIG. 8 may further include step 8.9: The OLT determines a faulty OEO and/or ONT based on a connection relationship between devices in the optical network.

In this embodiment of this application, step 8.10 may be further included.

Step 8.10: The OLT receives upstream information from an ONT directly connected to the OLT.

For an implementation principle of the upstream information, refer to the related descriptions in step 4.1. Details are not described herein again.

For an implementation principle of the ONT directly connected to the OLT, refer to the related descriptions in step 4.1. Details are not described herein again.

For an implementation principle of step 8.10, refer to the related descriptions in step 4.1. Details are not described herein again.

In this embodiment of this application, a sequence of performing step 8.10 and S801 to S803 is not limited. Details are not described herein.

Step 8.11: The OLT determines, based on the upstream information of the ONT directly connected to the OLT, an online ONT in the ONT directly connected to the OLT.

For an implementation principle of step 8.11, refer to the related descriptions in step 4.2. Details are not described herein again.

The OLT may further perform step 8.12 below based on the connection relationship that is between the cascaded devices in the optical network and that is determined in S803 above.

Step 8.12: The OLT determines the connection relationship between the devices in the entire optical network with reference to all lower-level devices of the OLT. For an implementation principle of step 8.12, refer to the related descriptions in step 4.3. Details are not described herein again.

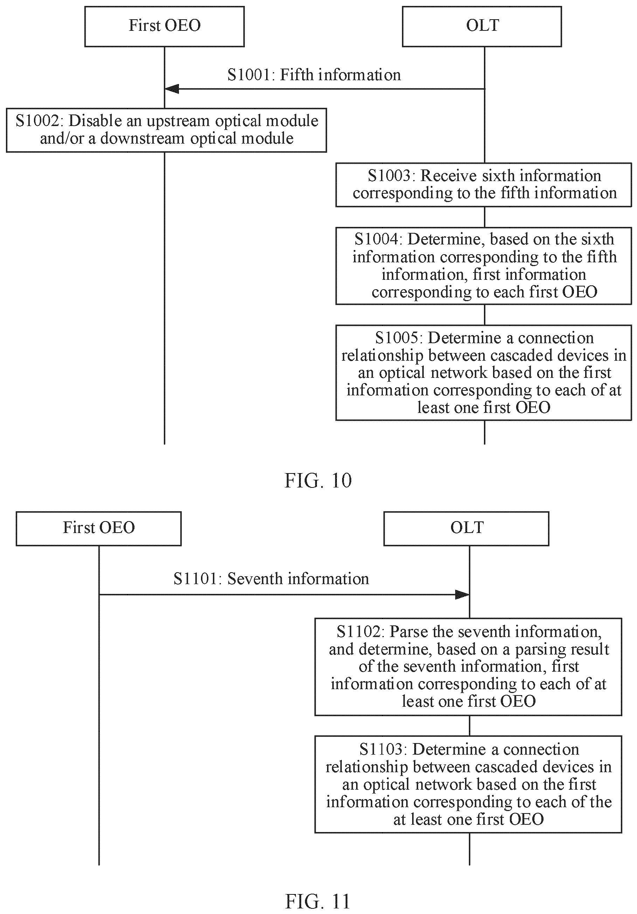

To simplify a data processing procedure of the first OEO, in some other embodiments, the OLT may obtain the first information by actively controlling an operation state (enabled or disabled) of each first OEO. Descriptions are provided below with reference to FIG. 10.

FIG. 10 is a schematic flowchart of another method for determining a network connection relationship according to an embodiment of this application. As shown in FIG. 10, the method for determining a network connection relationship includes the following steps.

S1001: An OLT sends fifth information to each of at least one first OEO. Accordingly, each of the at least one first OEO receives the fifth information from the OLT.

The fifth information indicates the first OEO to disable an upstream optical module and/or a downstream optical module.

For the at least one first OEO, refer to the related descriptions of the at least one first OEO in S401 above. Details are not described herein again.

The downstream optical module may be an OLT optical module in the first OEO. The upstream optical module may be an ONT optical module in the first OEO. The following describes the fifth information and S1001 with reference to different cases.

Case 1: The OLT separately sends the fifth information to the first OEO.

In this case, each first OEO corresponds to one piece of fifth information, and the fifth information indicates the first OEO to disable the downstream optical module.

Optionally, the fifth information may further indicate time within which the first OEO disables the downstream optical module.

In this case, S1001 may include: The OLT separately sends, to each first OEO, the fifth information corresponding to each first OEO. Accordingly, each of the at least one first OEO receives the respective fifth information from the OLT.

The communication system shown in FIG. 3 is used as an example. If the at least one first OEO includes OEO 1 to OEO 3, the OLT may send, to OEO 1, fifth information #1 corresponding to OEO 1, to indicate OEO 1 to disable a downstream optical module in OEO 1, and accordingly, OEO 1 receives the fifth information #1 corresponding to OEO 1; the OLT may send, to OEO 2, fifth information #2 corresponding to OEO 2, to indicate OEO 2 to disable a downstream optical module in OEO 2, and accordingly, OEO 2 receives the fifth information #2 corresponding to OEO 2; and the OLT may send, to OEO 3, fifth information #3 corresponding to OEO 3, to indicate OEO 3 to disable a downstream optical module in OEO 3, and accordingly, OEO 3 receives the fifth information #3 corresponding to OEO 3.

Case 2: The OLT sends a plurality of pieces of fifth information in a broadcast or multicast manner, where each piece of fifth information indicates one first OEO to disable a downstream optical module.

In this case, the fifth information may indicate identification information of the first OEO for which the downstream optical module needs to be disabled.

In this case, S1001 may include: The OLT sends each piece of fifth information. Accordingly, each of the at least one first OEO receives each piece of fifth information from the OLT.

The communication system shown in FIG. 3 is used as an example. If the at least one first OEO includes OEO 1 to OEO 3, the OLT may first send fifth information #4, where the fifth information #4 indicates that a first OEO for which a downstream optical module needs to be disabled is OEO 1, and accordingly, each of OEO 1 to OEO 3 receives the fifth information #4; then, the OLT may send fifth information #5, where the fifth information #5 indicates that a first OEO for which a downstream optical module needs to be disabled is OEO 2, and accordingly, each of OEO 1 to OEO 3 receives the fifth information #5; and then, the OLT may send fifth information #6, where the fifth information #6 indicates that a first OEO for which a downstream optical module needs to be disabled is OEO 3, and accordingly, each of OEO 1 to OEO 3 receives the fifth information #6.

Case 3: The OLT sends the fifth information in a broadcast or multicast manner, where all first OEOs correspond to a same piece of fifth information.

In this case, the fifth information indicates time within which each of the at least one first OEO disables the downstream optical module.

In this case, S1001 may include: The OLT sends the fifth information. Accordingly, each of the at least one first OEO receives the fifth information from the OLT.

The communication system shown in FIG. 3 is used as an example. If the at least one first OEO includes OEO 1 to OEO 3, the OLT may send the fifth information, where the fifth information indicates that a time period in which OEO 1 disables a downstream optical module is a time period T1, that a time period in which OEO 2 disables a downstream optical module is a time period T2, and that a time period in which OEO 3 disables a downstream optical module is a time period T3. The time period T1, the time period T2, and the time period T3 do not overlap each other, that is, do not include a same time point.

S1002: Each of the at least one first OEO disables the upstream optical module and/or the downstream optical module based on the received fifth information.

For example, S1002 may include: Each of the at least one first OEO disables the downstream optical module based on the received fifth information, each of the at least one first OEO disables the upstream optical module based on the received fifth information, or each of the at least one first OEO disables the upstream optical module and the downstream optical module based on the received fifth information.

With reference to Case 1 to Case 3, the following describes a principle of disabling, by each of the at least one first OEO, the downstream optical module based on the received fifth information.

For Case 1, each of the at least one first OEO may disable the downstream optical module after receiving the fifth information. Each of the at least one first OEO may disable the downstream optical module when a first duration threshold elapses after the fifth information is received.

The first duration threshold may be indicated by the fifth information, or may be preconfigured in the first OEO.

For example, the first duration threshold may be one millisecond.

It may be understood that first duration thresholds of different first OEOs may be the same, or may be different. Details are not described herein again.

For Case 2, each of the at least one first OEO may disable the downstream optical module when a second duration threshold elapses after the fifth information indicating the first OEO to disable the downstream optical module is received. The second duration threshold may be indicated by the fifth information, or may be preconfigured in the first OEO. The second duration threshold may be the same as a first duration threshold, or may be different from the first duration threshold.

For Case 3, each of the at least one first OEO may disable, based on the time indicated in the fifth information, the downstream optical module after receiving the fifth information.

The communication system shown in FIG. 3 is used as an example. It is assumed that the at least one first OEO includes OEO 1 to OEO 3. If in the fifth information, time within which OEO 1 disables a downstream optical module is a time period 1, time within which OEO 2 disables a downstream optical module is a time period 2, time within which OEO 3 disables a downstream optical module is a time period 3, and the time period 1 to the time period 3 do not overlap each other, OEO 1 disables the downstream optical module in the time period 1, OEO 2 disables the downstream optical module in the time period 2, and OEO 3 disables the downstream optical module in the time period 3.

For a principle of disabling, by each of the at least one first OEO, the upstream optical module based on the received fifth information or a principle of disabling, by each of the at least one first OEO, the upstream optical module and the downstream optical module based on the received fifth information, refer to the related descriptions in Case 1 to Case 3. Details are not described herein again.

It may be understood that, when an upstream optical module in a first OEO is disabled and a downstream optical module in the first OEO is enabled, the first OEO is in an online state. When at least a downstream optical module in a first OEO is disabled, the first OEO is in an offline state.

It may be understood that, in this embodiment of this application, time periods in which the different first OEOs disable optical modules are different.

S1003: Each online first OEO in the at least one first OEO sends sixth information to the OLT. Accordingly, the OLT receives the sixth information corresponding to the fifth information.

The sixth information corresponding to the fifth information indicates an online ONT. In other words, the sixth information corresponding to the fifth information includes identification information of the online first OEO or identification information of the online ONT device.

The communication system shown in FIG. 3 is used as an example. It is assumed that, in all the OEOs and ONTs in FIG. 3, only ONT 3 has been offline. In a period in which the downstream optical module in OEO 1 is disabled, OEO 1 may send sixth information to the OLT. Accordingly, the OLT may receive the sixth information from OEO 1. In this case, the OLT cannot receive sixth information from OEO 2 to OEO 3. In a period in which the downstream optical module in the OEO 2 is disabled, the OLT may receive sixth information from OEO 1, where the sixth information indicates that ONT 2 and ONT 3 are online. In a period in which OEO 3 is disabled, the OLT may receive sixth information from OEO 2, where the sixth information indicates that ONT 4 and ONT 5 are online.

In this way, the connection relationships shown in FIG. 5 may be obtained.

S1004: The OLT determines, based on the sixth information corresponding to the fifth information, first information corresponding to each first OEO.

The sixth information corresponding to each piece of fifth information corresponds to the first OEO that the fifth information indicates to disable the upstream optical module and/or the downstream optical module.

Determining, based on the sixth information corresponding to the fifth information, the first information corresponding to each first OEO may include: The OLT parses the sixth information corresponding to the fifth information, to obtain an online device in an optical network, and then determines the first information based on the device that is online in the optical network before the first OEO disables the upstream optical module and/or the downstream optical module.

For a principle of parsing, by the OLT, the sixth information corresponding to the fifth information, to obtain the online device in the optical network, refer to the related descriptions in S801 above. Details are not described herein again.

Descriptions are provided below with reference to the communication system shown in FIG. 3.

It is assumed that all devices in the communication system are online before a time point T3. At the time point T3, the OLT starts to send fifth information, where the fifth information indicates to disable the downstream optical module in OEO 2. In this way, each online device may send sixth information, namely, sixth information corresponding to the fifth information, to the OLT. It may be determined, based on the sixth information corresponding to the fifth information, that OEO 1 and OEO 2 are online and that the ONT 1 to ONT 3 are online. In this way, online devices indicated by first information corresponding to OEO 2 include devices, in the devices that are online before the time point T3, other than the online devices determined based on the sixth information.

S1005: The OLT determines a connection relationship between cascaded devices in the optical network based on the first information corresponding to each of the at least one first OEO.

For an implementation principle of S1005, refer to the related descriptions in S402 or S803. Details are not described herein again.

In a possible design solution, the method shown in FIG. 10 may further include step 10.1: The OLT determines a faulty OEO and/or ONT based on a connection relationship between devices in the optical network.

For a specific implementation principle of step 10.1, refer to the related descriptions in step 8.9 above. Details are not described herein again.

In this embodiment of this application, step 10.2 may be further included.

Step 10.2: The OLT receives upstream information from an ONT directly connected to the OLT.

For an implementation principle of the upstream information, refer to the related descriptions in step 4.1 or step 8.10. Details are not described herein again.

For an implementation principle of the ONT directly connected to the OLT, refer to the related descriptions in step 4.1 or step 8.10. Details are not described herein again.

For an implementation principle of step 10.2, refer to the related descriptions in step 4.1 or step 8.10. Details are not described herein again.

In this embodiment of this application, a sequence of performing step 10.2 and S1001 to S1005 is not limited. Details are not described herein.

Step 10.3: The OLT determines, based on the upstream information of the ONT directly connected to the OLT, an online ONT in the ONT directly connected to the OLT.

For an implementation principle of step 10.3, refer to the related descriptions in step 4.2 or step 8.11. Details are not described herein again.

The OLT may further perform step 10.4 below based on the connection relationship that is between the cascaded devices in the optical network and that is determined in S1005 above.

Step 10.4: The OLT determines the connection relationship between the devices in the entire optical network with reference to all lower-level devices of the OLT. For an implementation principle of step 10.4, refer to the related descriptions in step 4.3 or step 8.12. Details are not described herein again.

To simplify a data processing procedure of the first OEO and simplify a data exchange procedure, the OLT may obtain the first information by using information, for example, a PLOAM message, that is exchanged in the optical network and that is received by the OLT. Descriptions are provided below with reference to FIG. 11.

FIG. 11 is a schematic flowchart of another method for determining a network connection relationship according to an embodiment of this application. As shown in FIG. 11, the method includes the following steps.

S1101: An OLT receives seventh information of at least one first OEO.

The seventh information is information for physical layer operations, administration and maintenance, and one piece of seventh information corresponds to one first OEO or one lower-level device of the first OEO.

For example, the seventh information may be a PLOAM message. The seventh information carries identification information of an ONT that sends the seventh information and identification information of an OEO connected to the ONT that sends the seventh information.

For a specific implementation principle of the seventh information, refer to the related descriptions of the second information.

S1102: The OLT parses the seventh information, and the OLT determines, based on a parsing result of each piece of seventh information, first information corresponding to each of the at least one first OEO.

That the OLT determines, based on the parsing result of each piece of seventh information, the first information corresponding to each of the at least one first OEO may include: The OLT determines, as an online device, a device that is indicated as being in an online state in the seventh information, and determines a connection relationship based on an online device in a lower-level device of each first OEO.

For an implementation principle of S1102, refer to the related descriptions of the obtaining manner 1 in S802. Details are not described herein again.

S1103: The OLT determines a connection relationship between cascaded devices in an optical network based on the first information corresponding to each of the at least one first OEO.

For an implementation principle of S1103, refer to the related descriptions in S402, S803, or S1005. Details are not described herein again.

In embodiments of this application, "online" may mean that a device may communicate with the OLT when an optical line between the device and the OLT is conducted.

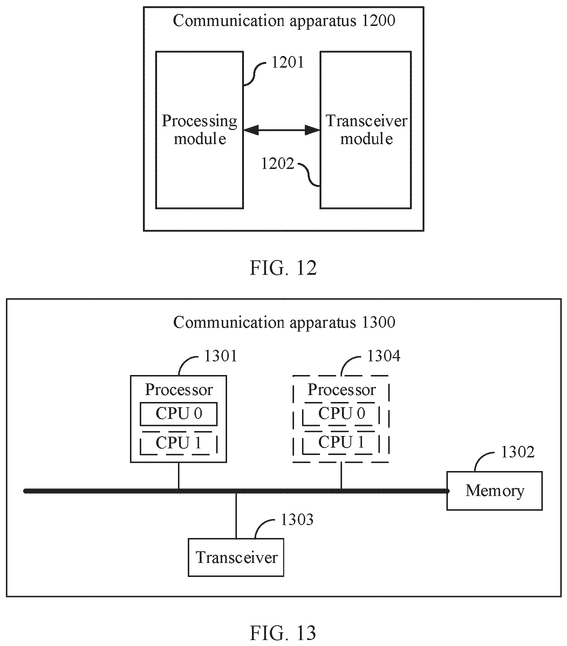

With reference to FIG. 3 to FIG. 11, the foregoing describes in detail the methods for determining a network connection relationship provided in embodiments of this application. With reference to FIG. 12 and FIG. 13, the following describes in detail communication apparatuses configured to perform the methods for determining a network connection relationship provided in embodiments of this application.

For example, FIG. 12 is a diagram of a structure of a communication apparatus according to an embodiment of this application. As shown in FIG. 12, the communication apparatus 1200 includes a processing module 1201 and a transceiver module 1202. For ease of description, FIG. 12 shows merely main parts of the communication apparatus 1200.

In some embodiments, the communication apparatus 1200 is applicable to the communication system shown in FIG. 3, and perform functions of the first OEO in the methods for determining a network connection relationship shown in FIG. 4 and FIG. 8.

The processing module 1201 is configured to obtain first information corresponding to the communication apparatus 1200, where
the first information corresponding to the communication apparatus 1200 indicates an online device in a lower-level device of the communication apparatus 1200, and the lower-level device of the communication apparatus 1200 includes a second OEO and/or an ONT.

The transceiver module 1202 is configured to send, to an OLT in an optical network, the first information corresponding to the communication apparatus 1200.

In a possible design solution, the processing module 1201 is specifically configured to receive at least one piece of second information by using the transceiver module 1202, where the second information is information for physical layer operations, administration and maintenance, and one piece of second information corresponds to one lower-level device of the communication apparatus 1200. The processing module 1201 is specifically configured to obtain the first information based on the at least one piece of second information.

Optionally, the processing module 1201 is further configured to: parse the at least one piece of second information to obtain identification information and status information of a device corresponding to each piece of second information; and obtain the first information based on the identification information and the status information of the device corresponding to each piece of second information, where the online device that is in the lower-level device of the communication apparatus 1200 and that is indicated by the first information includes a device whose status information is being online and that is in a device corresponding to the at least one piece of second information.

In a possible design solution, the processing module 1201 is specifically configured to receive at least one piece of second information and third information by using the transceiver module 1202, where the second information is information for physical layer operations, administration and maintenance, one piece of second information corresponds to one lower-level device of the communication apparatus 1200, and the third information is information for allocation of a time domain resource. The processing module 1201 is specifically configured to obtain the first information based on the second information and the third information.

Optionally, the processing module 1201 is further configured to: parse each piece of second information to obtain identification information and status information of a device corresponding to the piece of second information; parse the third information to obtain a device that has been offline and that is in the lower-level device of the communication apparatus 1200; and determine the first information based on the identification information and the status information of the device corresponding to each piece of second information, and the device that has been offline and that is in the lower-level device of the communication apparatus 1200, where the online device that is in the lower-level device of the communication apparatus 1200 and that is indicated by the first information includes a device, in a device that corresponds to the at least one piece of second information and whose status information is being online, other than the device that has been offline and that is in the lower-level device of the communication apparatus 1200.

In a possible design solution, the processing module 1201 is specifically configured to: receive at least one piece of fourth information and receive third information from the OLT by using the transceiver module 1202, where the fourth information is for carrying a data packet exchanged between the OLT and the lower-level device of the communication apparatus 1200, the fourth information carries identification information of a device that sends the fourth information, and the third information is information for allocation of a time domain resource. The processing module 1201 is specifically configured to obtain the first information based on the fourth information and the third information.

Optionally, the processing module 1201 is further configured to: parse the fourth information to obtain identification information of a lower-level device that is of the communication apparatus 1200 and that corresponds to each piece of fourth information; parse each piece of third information to obtain a device that has been offline and that is in the lower-level device of the communication apparatus 1200; and determine the first information based on the identification information of the lower-level device that is of the communication apparatus 1200 and that corresponds to each piece of fourth information, and the device that has been offline and that is in the lower-level device of the communication apparatus 1200, where the online device that is in the lower-level device of the communication apparatus 1200 and that is indicated by the first information includes a device, in a lower-level device that is of the communication apparatus 1200 and that corresponds to all fourth information, other than the device that has been offline and that is in the lower-level device of the communication apparatus 1200.

In a possible design solution, the transceiver module 1202 is specifically configured to: when it is determined that the online device in the lower-level device of the communication apparatus 1200 changes, send, to the OLT in the optical network, the first information corresponding to the communication apparatus 1200.

In a possible design solution, the transceiver module 1202 is further configured to receive a first obtaining request from the OLT, where the first obtaining request indicates the communication apparatus 1200 to send the first information.

Optionally, the transceiver module 1202 is further configured to send first alarm information to the OLT, where the first alarm information indicates the OLT to send the first obtaining request.

In a possible design solution, the transceiver module 1202 is further configured to receive a second obtaining request from the OLT, where the second obtaining request indicates to send identification information of the online device in the lower-level device of the communication apparatus 1200.

Optionally, the transceiver module 1202 is further configured to send second alarm information to the OLT, where the second alarm information indicates the OLT to send the second obtaining request.

Optionally, the transceiver module 1202 may include a receiving module and a sending module (not shown in FIG. 12). The transceiver module 1202 is configured to implement a sending function and a receiving function of the communication apparatus 1200.

Optionally, the communication apparatus 1200 may further include a storage module (not shown in FIG. 12). The storage module stores a program or instructions. When the processing module 1201 executes the program or the instructions, the communication apparatus 1200 is enabled to perform a function of the first OEO in the method for determining a network connection relationship shown in any one of FIG. 4 or FIG. 8.

It should be understood that the processing module 1201 in the communication apparatus 1200 may be implemented by using a processor or a processor-related circuit component, and may be a processor or a processing unit. The transceiver module 1202 may be implemented by using a transceiver or a transceiver-related circuit component, and may be a transceiver or a transceiver unit.

It should be noted that the communication apparatus 1200 may be a terminal device or a network device, a chip (a system) or another part or component that may be disposed in the terminal device or the network device, or an apparatus including the terminal device or the network device. This is not limited in this application.

In addition, for technical effects of the communication apparatus 1200, refer to the technical effects of the method for determining a network connection relationship shown in any one of FIG. 3 or FIG. 8. Details are not described herein again.

In some other embodiments, the communication apparatus 1200 is applicable to the communication system shown in FIG. 3, and perform a function of the OLT in the method for determining a network connection relationship shown in FIG. 3, FIG. 8, FIG. 10, or FIG. 11.

The processing module 1201 is configured to obtain, by using the transceiver module 1202, first information corresponding to each of at least one first OEO in an optical network, where the first information corresponding to the first OEO indicates an online device in a lower-level device of the first OEO, and the lower-level device of the first OEO includes a second OEO and/or an ONT. The processing module 1201 is further configured to determine a connection relationship between cascaded devices in the optical network based on the first information corresponding to each of the at least one first OEO.

In a possible design solution, the processing module 1201 is specifically configured to receive, from the at least one first OEO by using the transceiver module 1202, the first information corresponding to each first OEO.

For example, the transceiver module 1202 is further configured to send third information, where the third information is information for allocation of a time domain resource.

Optionally, the transceiver module 1202 is further configured to send a first obtaining request to each of the at least one first OEO, where the first obtaining request indicates the first OEO to send the first information.

Further, the transceiver module 1202 is further configured to receive first alarm information from each of the at least one first OEO, where the first alarm information indicates the communication apparatus 1200 to send the first obtaining request.

Optionally, the transceiver module 1202 is further configured to send a second obtaining request to each of the at least one first OEO, where the second obtaining request indicates to send identification information of the online device in the lower-level device of the first OEO.

Further, the transceiver module 1202 is further configured to receive second alarm information from each of the at least one first OEO, where the second alarm information indicates the communication apparatus 1200 to send the second obtaining request.

In a possible design solution, the processing module 1201 is specifically configured to send fifth information to each of the at least one first OEO by using the transceiver module 1202, where the fifth information indicates the first OEO to disable an upstream optical module and/or a downstream optical module. The processing module 1201 is further configured to receive, by using the transceiver module 1202, sixth information corresponding to the fifth information, where the sixth information indicates an online ONT. The processing module 1201 is specifically configured to determine, based on each piece of sixth information, the first information corresponding to each first OEO.

In a possible design solution, the processing module 1201 is further configured to determine a faulty OEO and/or ONT based on the connection relationship between the cascaded devices in the optical network.

Optionally, the transceiver module 1202 may include a receiving module and a sending module (not shown in FIG. 12). The transceiver module 1202 is configured to implement a sending function and a receiving function of the communication apparatus 1200.

Optionally, the communication apparatus 1200 may further include a storage module (not shown in FIG. 12). The storage module stores a program or instructions. When the processing module 1201 executes the program or the instructions, the communication apparatus 1200 is enabled to perform a function of the OLT in the method for determining a network connection relationship shown in any one of FIG. 3, FIG. 8, FIG. 10, or FIG. 11.

It should be understood that the processing module 1201 in the communication apparatus 1200 may be implemented by using a processor or a processor-related circuit component, and may be a processor or a processing unit. The transceiver module 1202 may be implemented by using a transceiver or a transceiver-related circuit component, and may be a transceiver or a transceiver unit.

It should be noted that the communication apparatus 1200 may be a terminal device or a network device, a chip (a system) or another part or component that may be disposed in the terminal device or the network device, or an apparatus including the terminal device or the network device. This is not limited in this application.

In addition, for technical effects of the communication apparatus 1200, refer to the technical effects of the method for determining a network connection relationship shown in any one of FIG. 3, FIG. 8, FIG. 10, or FIG. 11. Details are not described herein again.

For example, FIG. 13 is a diagram of a structure of another communication apparatus according to an embodiment of this application. The communication apparatus may be a terminal device or a network device, or a chip (a system) or another part or component that may be disposed in the terminal device or the network device. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each component of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), and may be an application specific integrated circuit (application specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302 and invoking data stored in the memory 1302.

During specific implementation, in an embodiment, the processor 1301 may include one or more CPUs, such as a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may refer to one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of being for carrying or storing expected program code in a form of instructions or a data structure and capable of being accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is the terminal device, and the transceiver 1303 may be configured to communicate with a network device or communicate with another terminal device. For another example, the communication apparatus 1300 is the network device, and the transceiver 1303 may be configured to communicate with a terminal device or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through the interface circuit (not shown in FIG. 13) of the communication apparatus 1300. This is not specifically limited in this embodiment of this application.

It should be noted that, the structure of the communication apparatus 1300 shown in FIG. 13 does not constitute any limitation on the communication apparatus. An actual communication apparatus may include more or fewer parts than those shown in the figure, combine some parts, or have different part arrangements.

In addition, for technical effects of the communication apparatus 1300, refer to the technical effects of the methods for determining a network connection relationship in the foregoing method embodiments. Details are not described herein again.

It should be understood that the processor in embodiments of this application may be a central processing unit (central processing unit, CPU). The processor may alternatively be another general-purpose processor, a DSP, an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any other combination. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that a term "and/or" in this specification describes only an association relationship between associated objects, and indicates that three relationships may exist. For example, A and/or B may indicate the following three cases: Only A exists, both A and B exist, and only B exists. A and B each may be in a singular or plural form. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following" or a similar expression thereof refers to any combination of these items, including a singular item or any combination of plural items. For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes: various media that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a network connection relationship, wherein the method comprises:
obtaining, by a first optical-electrical-optical device, first information corresponding to the first optical-electrical-optical device, wherein the first information corresponding to the first optical-electrical-optical device indicates an online device in a lower-level device of the first optical-electrical-optical device, and the lower-level device of the first optical-electrical-optical device comprises a second optical-electrical-optical device and/or an optical network termination; and
sending, by the first optical-electrical-optical device to an optical line termination in an optical network, the first information corresponding to the first optical-electrical-optical device.

2. The method according to claim 1, wherein the obtaining, by a first optical-electrical-optical device, first information corresponding to the first optical-electrical-optical device comprises:
receiving, by the first optical-electrical-optical device, at least one piece of second information, wherein the second information is information for physical layer operations, administration and maintenance, and one piece of second information corresponds to one lower-level device of the first optical-electrical-optical device; and
obtaining, by the first optical-electrical-optical device, the first information based on the at least one piece of second information.

3. The method according to claim 2, wherein the obtaining, by the first optical-electrical-optical device, the first information based on the at least one piece of second information comprises:
parsing, by the first optical-electrical-optical device, the at least one piece of second information to obtain identification information and status information of a device corresponding to each piece of second information; and
obtaining, by the first optical-electrical-optical device, the first information based on the identification information and the status information of the device corresponding to each piece of second information, wherein the online device that is in the lower-level device of the first optical-electrical-optical device and that is indicated by the first information comprises a device whose status information is being online and that is in at least one device corresponding to the at least one piece of second information.

4. The method according to claim 1, wherein the obtaining, by a first optical-electrical-optical device, first information corresponding to the first optical-electrical-optical device comprises:
receiving, by the first optical-electrical-optical device, at least one piece of second information and third information, wherein the second information is information for physical layer operations, administration and maintenance, one piece of second information corresponds to one lower-level device of the first optical-electrical-optical device, and the third information is information for allocation of a time domain resource; and
obtaining, by the first optical-electrical-optical device, the first information based on the second information and the third information.

5. The method according to claim 4, wherein the obtaining, by the first optical-electrical-optical device, the first information based on the second information and the third information comprises:
parsing, by the first optical-electrical-optical device, each piece of second information to obtain identification information and status information of a device corresponding to the piece of second information;
parsing, by the first optical-electrical-optical device, the third information to obtain a device that has been offline and that is in the lower-level device of the first optical-electrical-optical device; and
determining, by the first optical-electrical-optical device, the first information based on the identification information and the status information of the device corresponding to each piece of second information, and the device that has been offline and that is in the lower-level device of the first optical-electrical-optical device, wherein the online device that is in the lower-level device of the first optical-electrical-optical device and that is indicated by the first information comprises a device, in a device that corresponds to the at least one piece of second information and whose status information is being online, other than the device that has been offline and that is in the lower-level device of the first optical-electrical-optical device.

6. The method according to claim 1, wherein the obtaining, by a first optical-electrical-optical device, first information corresponding to the first optical-electrical-optical device comprises:
receiving, by the first optical-electrical-optical device, at least one piece of fourth information, wherein the fourth information is for carrying a data packet exchanged between the optical line termination and the lower-level device of the first optical-electrical-optical device, and the fourth information carries identification information of a device that sends the fourth information;
receiving, by the first optical-electrical-optical device, third information from the optical line termination, wherein the third information is information for allocation of a time domain resource; and
obtaining, by the first optical-electrical-optical device, the first information based on the fourth information and the third information.

7. The method according to claim 6, wherein the obtaining, by the first optical-electrical-optical device, the first information based on the fourth information and the third information comprises:
parsing, by the first optical-electrical-optical device, the fourth information to obtain identification information of a lower-level device that is of the first optical-electrical-optical device and that corresponds to each piece of fourth information;
parsing, by the first optical-electrical-optical device, each piece of third information to obtain a device that has been offline and that is in the lower-level device of the first optical-electrical-optical device; and
determining, by the first optical-electrical-optical device, the first information based on the identification information of the lower-level device that is of the first optical-electrical-optical device and that corresponds to each piece of fourth information, and the device that has been offline and that is in the lower-level device of the first optical-electrical-optical device, wherein the online device that is in the lower-level device of the first optical-electrical-optical device and that is indicated by the first information comprises a device, in a lower-level device that is of the first optical-electrical-optical device and that corresponds to all fourth information, other than the device that has been offline and that is in the lower-level device of the first optical-electrical-optical device.

8. The method according to any one of claims 1 to 7, wherein the sending, by the first optical-electrical-optical device to an optical line termination in an optical network, the first information corresponding to the first optical-electrical-optical device comprises:
if the first optical-electrical-optical device determines that the online device in the lower-level device of the first optical-electrical-optical device changes, sending, by the first optical-electrical-optical device to the optical line termination in the optical network, the first information corresponding to the first optical-electrical-optical device.

9. The method according to any one of claims 1 to 7, wherein the method further comprises:
receiving, by the first optical-electrical-optical device, a first obtaining request from the optical line termination, wherein the first obtaining request indicates the first optical-electrical-optical device to send the first information.

10. The method according to claim 9, wherein before the receiving, by the first optical-electrical-optical device, a first obtaining request from the optical line termination, the method further comprises:
sending, by the first optical-electrical-optical device, first alarm information to the optical line termination, wherein the first alarm information indicates the optical line termination to send the first obtaining request.

11. The method according to any one of claims 1 to 7, wherein the method further comprises:
receiving, by the first optical-electrical-optical device, a second obtaining request from the optical line termination, wherein the second obtaining request indicates to send identification information of the online device in the lower-level device of the first optical-electrical-optical device.

12. The method according to claim 11, wherein before the receiving, by the first optical-electrical-optical device, a second obtaining request from the optical line termination, the method further comprises:
sending, by the first optical-electrical-optical device, second alarm information to the optical line termination, wherein the second alarm information indicates the optical line termination to send the second obtaining request.

13. A method for determining a network connection relationship, wherein the method comprises:
obtaining, by an optical line termination, first information corresponding to each of at least one first optical-electrical-optical device in an optical network, wherein the first information corresponding to the first optical-electrical-optical device indicates an online device in a lower-level device of the first optical-electrical-optical device, and the lower-level device of the first optical-electrical-optical device comprises a second optical-electrical-optical device and/or an optical network termination; and
determining, by the optical line termination, a connection relationship between cascaded devices in the optical network based on the first information corresponding to each of the at least one first optical-electrical-optical device.

14. The method according to claim 13, wherein the obtaining, by an optical line termination, first information corresponding to each of at least one first optical-electrical-optical device in an optical network comprises:
receiving, by the optical line termination from the at least one first optical-electrical-optical device, the first information corresponding to each first optical-electrical-optical device.

15. The method according to claim 14, wherein before the obtaining, by an optical line termination, first information corresponding to each of at least one first optical-electrical-optical device in an optical network, the method further comprises:
sending, by the optical line termination, third information, wherein the third information is information for allocation of a time domain resource.

16. The method according to claim 14 or 15, wherein the method further comprises:
sending, by the optical line termination, a first obtaining request to each of the at least one first optical-electrical-optical device, wherein the first obtaining request indicates the first optical-electrical-optical device to send the first information.

17. The method according to claim 16, wherein the method further comprises:
receiving, by the optical line termination, first alarm information from each of the at least one first optical-electrical-optical device, wherein the first alarm information indicates to send the first obtaining request.

18. The method according to claim 14 or 15, wherein the method further comprises:
sending, by the optical line termination, a second obtaining request to each of the at least one first optical-electrical-optical device, wherein the second obtaining request indicates to send identification information of the online device in the lower-level device of the first optical-electrical-optical device.

19. The method according to claim 18, wherein the method further comprises:
receiving, by the optical line termination, second alarm information from each of the at least one first optical-electrical-optical device, wherein the second alarm information indicates the optical line termination to send the second obtaining request.

20. The method according to claim 13, wherein the obtaining, by an optical line termination, first information corresponding to each of at least one first optical-electrical-optical device in an optical network comprises:
sending, by the optical line termination, fifth information to each of the at least one first optical-electrical-optical device, wherein the fifth information indicates the first optical-electrical-optical device to disable an upstream optical module and/or a downstream optical module;
receiving, by the optical line termination, sixth information corresponding to the fifth information, wherein the sixth information corresponding to the fifth information indicates an online optical network termination; and
determining, by the optical line termination based on sixth information corresponding to each piece of fifth information, the first information corresponding to each first optical-electrical-optical device.

21. The method according to any one of claims 13 to 20, wherein the method further comprises:
determining, by the optical line termination, a faulty optical-electrical-optical device and/or optical network termination based on the connection relationship between the cascaded devices in the optical network.

22. A method for determining a network connection relationship, wherein the method comprises:
obtaining, by at least one first optical-electrical-optical device, first information corresponding to the first optical-electrical-optical device, wherein the first information corresponding to the first optical-electrical-optical device indicates an online device in a lower-level device of the first optical-electrical-optical device, and the lower-level device of the first optical-electrical-optical device comprises a second optical-electrical-optical device and/or an optical network termination;
sending, by each of the at least one first optical-electrical-optical device to an optical line termination in an optical network, first information corresponding to the first optical-electrical-optical device;
receiving, by the optical line termination from the at least one first optical-electrical-optical device, the first information corresponding to each first optical-electrical-optical device; and
determining, by the optical line termination, a connection relationship between cascaded devices in the optical network based on the first information corresponding to each of the at least one first optical-electrical-optical device.

23. The method according to claim 22, wherein the obtaining, by at least one first optical-electrical-optical device, first information corresponding to the first optical-electrical-optical device comprises:
receiving, by each of at least one first optical-electrical-optical device, at least one piece of second information, wherein the second information is information for physical layer operations, administration and maintenance, and one piece of second information corresponds to one lower-level device of the first optical-electrical-optical device; and
obtaining, by each of the at least one first optical-electrical-optical device, the first information based on the at least one piece of second information.

24. The method according to claim 23, wherein the obtaining, by each of the at least one first optical-electrical-optical device, the first information based on the at least one piece of second information comprises:
parsing, by each of the at least one first optical-electrical-optical device, the at least one piece of second information to obtain identification information and status information of a device corresponding to each piece of second information; and
obtaining, by each of the at least one first optical-electrical-optical device, the first information based on the identification information and the status information of the device corresponding to each piece of second information, wherein an online device that is in a lower-level device of the first optical-electrical-optical device and that is indicated by the first information comprises a device whose status information is being online and that is in a device corresponding to the at least one piece of second information.

25. The method according to claim 22, wherein the obtaining, by at least one first optical-electrical-optical device, first information corresponding to the first optical-electrical-optical device comprises:
receiving, by each of the at least one first optical-electrical-optical device, at least one piece of second information and third information, wherein the second information is information for physical layer operations, administration and maintenance, one piece of second information corresponds to one lower-level device of the first optical-electrical-optical device, and the third information is information for allocation of a time domain resource; and
obtaining, by each of the at least one first optical-electrical-optical device, the first information based on the second information and the third information.

26. The method according to claim 25, wherein the obtaining, by each of the at least one first optical-electrical-optical device, the first information based on the second information and the third information comprises:
parsing, by each of the at least one first optical-electrical-optical device, each piece of second information to obtain identification information and status information of a device corresponding to the piece of second information;
parsing, by each of the at least one first optical-electrical-optical device, the third information to obtain a device that has been offline and that is in a lower-level device of the first optical-electrical-optical device; and
determining, by each of the at least one first optical-electrical-optical device, the first information based on the identification information and the status information of the device corresponding to each piece of second information, and the device that has been offline and that is in the lower-level device of the first optical-electrical-optical device, wherein an online device that is in the lower-level device of the first optical-electrical-optical device and that is indicated by the first information comprises a device, in a device that corresponds to the at least one piece of second information and whose status information is being online, other than the device that has been offline and that is in the lower-level device of the first optical-electrical-optical device.

27. The method according to claim 22, wherein the obtaining, by at least one first optical-electrical-optical device, first information corresponding to the first optical-electrical-optical device comprises:
receiving, by each of the at least one first optical-electrical-optical device, at least one piece of fourth information, wherein the fourth information is for carrying a data packet exchanged between the optical line termination and a lower-level device of the first optical-electrical-optical device, and the fourth information carries identification information of a device that sends the fourth information;
receiving, by each of the at least one first optical-electrical-optical device, third information from the optical line termination, wherein the third information is information for allocation of a time domain resource; and
obtaining, by each of the at least one first optical-electrical-optical device, the first information based on the fourth information and the third information.

28. The method according to claim 27, wherein the obtaining, by each of the at least one first optical-electrical-optical device, the first information based on the fourth information and the third information comprises:
parsing, by each of the at least one first optical-electrical-optical device, the fourth information to obtain identification information of a lower-level device that is of the optical line termination and that corresponds to each piece of fourth information;
parsing, by each of the at least one first optical-electrical-optical device, each piece of third information to obtain a device that has been offline and that is in the lower-level device of the first optical-electrical-optical device; and
determining, by each of the at least one first optical-electrical-optical device, the first information based on the identification information of the lower-level device that is of the first optical-electrical-optical device and that corresponds to each piece of fourth information, and the device that has been offline and that is in the lower-level device of the first optical-electrical-optical device, wherein an online device that is in the lower-level device of the first optical-electrical-optical device and that is indicated by the first information comprises a device, in a lower-level device that is of the first optical-electrical-optical device and that corresponds to all fourth information, other than the device that has been offline and that is in the lower-level device of the first optical-electrical-optical device.

29. The method according to any one of claims 22 to 28, wherein the sending, by each of the at least one first optical-electrical-optical device to an optical line termination in an optical network, first information corresponding to the first optical-electrical-optical device comprises:
if the first optical-electrical-optical device determines that the online device in the lower-level device of the first optical-electrical-optical device changes, sending, by the first optical-electrical-optical device to the optical line termination in the optical network, the first information corresponding to the first optical-electrical-optical device.

30. The method according to any one of claims 22 to 28, wherein the method further comprises:
sending, by the optical line termination, a first obtaining request to each of the at least one first optical-electrical-optical device, wherein the first obtaining request indicates the first optical-electrical-optical device to send the first information; and
receiving, by each of the at least one first optical-electrical-optical device, the first obtaining request from the optical line termination.

31. The method according to claim 30, wherein the method further comprises:
sending, by each of the at least one first optical-electrical-optical device, first alarm information to the optical line termination; and
receiving, by the optical line termination, the first alarm information from each of the at least one first optical-electrical-optical device, wherein the first alarm information indicates to send the first obtaining request.

32. The method according to any one of claims 22 to 28, wherein the method further comprises:
sending, by the optical line termination, a second obtaining request to each of the at least one first optical-electrical-optical device, wherein the second obtaining request indicates to send identification information of the online device in the lower-level device of the first optical-electrical-optical device; and
receiving, by each of the at least one first optical-electrical-optical device, the second obtaining request from the optical line termination.

33. The method according to claim 32, wherein the method further comprises:
sending, by each of the at least one first optical-electrical-optical device, second alarm information to the optical line termination; and
receiving, by the optical line termination, the second alarm information from each of the at least one first optical-electrical-optical device, wherein the second alarm information indicates to send the second obtaining request.

34. The method according to any one of claims 22 to 33, wherein the method further comprises:
determining, by the optical line termination, a faulty optical-electrical-optical device and/or optical network termination based on the connection relationship between the cascaded devices in the optical network.

35. A communication system, wherein the communication system comprises a first optical-electrical-optical device and an optical line termination, the first optical-electrical-optical device is configured to perform the method according to any one of claims 1 to 12, and the optical line termination is configured to perform the method according to any one of claims 13 to 21.

36. A communication apparatus, wherein the communication apparatus is configured to perform the method according to any one of claims 1 to 21.

37. A communication apparatus, comprising a processor, wherein the processor is configured to perform the method according to any one of claims 1 to 21.

38. A communication apparatus, comprising a processor and an interface circuit, wherein
the processor and the interface circuit are connected to each other through a line; and
the processor is configured to perform the method according to any one of claims 1 to 21.

39. A communication apparatus, wherein the communication apparatus comprises a processor and a transceiver, the processor and the transceiver are connected to each other through a line, and the processor is configured to perform the method according to any one of claims 1 to 21.

40. A computer-readable storage medium, wherein the computer-readable storage medium comprises a computer program or instructions; and when the computer program or the instructions are run on a computer, the computer is enabled to perform the method according to any one of claims 1 to 21.

41. A computer program product, wherein the computer program product comprises a computer program or instructions; and when the computer program or the instructions are run on a computer, the computer is enabled to perform the method according to any one of claims 1 to 21.
